# EUROPEAN PATENT APPLICATION

(11) **EP 3 787 369 A1**
(43) Date of publication of application: **03.03.2021**
(21) Application number: 19846934.8
(22) Date of filing: 11.07.2019
(51) Int. Cl.: H04W 76/19

(54) **CONNECTION RECONSTRUCTION METHOD, DEVICE AND SYSTEM**

(30) Priority: 08.08.2018 CN 201810897733
(71) Applicant: HUAWEI TECHNOLOGIES CO., LTD., Shenzhen, Guangdong 518129 (CN)
(72) Inventor: YIN, Yu, Shenzhen, Guangdong 518129 (CN); QI, Caixia, Shenzhen, Guangdong 518129 (CN)
(74) Representative: Isarpatent
(86) International application number: PCT/CN2019/095621
(87) International publication number: WO 2020/029742

(57) **Abstract**

Embodiments of this application provide a connection re-establishment method, a device, and a system, to re-establish a connection of a terminal to a specified network device. The connection re-establishment method includes: A source network device determines that a connection of a terminal is to be released; the source network device obtains information about a target network device; and the source network device sends the information about the target network device, where the information about the target network device is used to re-establish the connection to the target network device.

## Description

This application claims priority to Chinese Patent Application No. 201810897733.8, filed with China National Intellectual Property Administration on August 8, 2018 and entitled "CONNECTION RE-ESTABLISHMENT METHOD, DEVICE, AND SYSTEM", which is incorporated herein by reference in its entirety.

### TECHNICAL FIELD

This application relates to the field of communications technologies, and in particular, to a connection re-establishment method, a device, and a system.

### BACKGROUND

A network device in a mobile communications network usually supports an operation and maintenance scenario such as upgrading, cutover, or load balancing. Upgrading means that, during deployment of a new feature, software of a version that supports the new feature usually is to be upgraded. Cutover means to migrate a service carried by a network device A to a network device B. For example, a customer purchases the network device B of a manufacturer B to replace the network device A of a manufacturer A. Load balancing means that some services of the network device A with high load are migrated to the network device B with low load. This is also applicable to load balancing between different boards/interfaces/processes of a same network device.

In the foregoing scenario, a connection of a terminal usually is to be re-established. In a process of re-establishing the connection of the terminal in the prior art, a current network device selects, based on a principle such as load sharing, one network device from a list of other network devices found in a domain name system (domain name system, DNS) to establish the connection. This obviously cannot meet a requirement of migrating a connection of the network device A to the network device B or implementing load balancing between different boards/interfaces/processes of the network device in the foregoing scenario.

Therefore, how to re-establish the connection of the terminal to a specified network device is an urgent problem to be resolved currently.

### SUMMARY

Embodiments of this application provide a connection re-establishment method, a device, and a system, to re-establish a connection of a terminal to a specified network device.

To achieve the foregoing objective, the following technical solutions are used in the embodiments of this application.

According to a first aspect, a connection re-establishment method is provided, and the connection re-establishment method includes: A source network device determines that a connection of a terminal is to be released, the source network device obtains information about a target network device, and the source network device sends the information about the target network device, where the information about the target network device is used to re-establish the connection to the target network device. Based on the connection re-establishment method provided in this embodiment of this application, after determining that the connection of the terminal is to be released, the source network device may obtain the information about the target network device, and send the information about the target gateway device, where the information about the target network device is used to re-establish the connection to the target network device. In other words, based on the connection re-establishment method provided in this embodiment of this application, the connection of the terminal may be re-established to a specified network device, thereby meeting a requirement of migrating a connection of one network device to another network device or implementing load balancing between different boards/interfaces/processes of the network device in an operation and maintenance scenario such as upgrading, cutover, or load balancing.

In a possible design, the connection re-establishment method further includes: The source network device sends a connection re-establishment timer to the terminal, where the connection re-establishment timer is used to indicate a time in which the terminal re-establishes the connection. In this way, when connections of a plurality of terminals need to be re-established, the connections of all the terminals may be controlled to be re-established within a specific period of time, thereby avoiding a prior-art problem of overload of another device in a mobile communications network that may be caused when all the terminals simultaneously initiate a connection establishment procedure.

In a possible design, the connection re-establishment method further includes: The source network device sends first indication information to the terminal, where the first indication information is used to indicate the terminal to delete the original connection after re-establishing the connection. In this embodiment of this application, because the original connection may be deleted after a new connection is established, service continuity can be ensured.

In a possible design, the source network device is a source session management network element, and the target network device is a target session management network element; the source network device is a source data gateway, and the target network device is a target data gateway; or the source network device is a source serving gateway, and the target network device is a target serving gateway. Correspondingly, that the source network device sends the information about the target network device is specifically: The source network device sends the information about the target network device to a mobility management network element or the terminal. In other words, based on the connection re-establishment method provided in this embodiment of this application, the connection of the terminal may be re-established to a specified session management network element, thereby meeting a requirement of migrating a connection of one session management network element to another session management network element or implementing load balancing between different boards/interfaces/processes of the session management network element in an operation and maintenance scenario such as upgrading, cutover, or load balancing.

In a possible design, the information about the target network device includes one or more of a uniform resource identifier URI of the target network device, an internet protocol IP address of the target network device, or a fully qualified domain name FQDN of the target network device.

In a possible design, the source network device is a source session management network element, and the target network device is a target session management network element. Correspondingly, that a source network device determines that a connection of a terminal is to be released is specifically: The source session management network element receives a connection release request from a source user plane network element, where the connection release request carries information about a target user plane network element, and is used to request the source session management network element to release a connection that is of the terminal and that is on the source user plane network element. In other words, release of a connection on a session management network element in this embodiment of this application may be triggered by a user plane network element. This is not specifically limited in this embodiment of this application.

In a possible design, the source network device is a source mobility management network element, and the target network device is a target mobility management network element. Correspondingly, that the source network device sends the information about the target network device is specifically: The source mobility management network element sends information about the target mobility management network element to an access device or the terminal. In other words, based on the connection re-establishment method provided in this embodiment of this application, the connection of the terminal may be re-established to a specified mobility management network element, thereby meeting a requirement of migrating a connection of one mobility management network element to another mobility management network element or implementing load balancing between different boards/interfaces/processes of the mobility management network element in an operation and maintenance scenario such as upgrading, cutover, or load balancing.

In a possible design, the connection re-establishment method further includes: The source mobility management network element sends third indication information to the access device, where the third indication information is used to indicate the access device to reserve a radio resource control RRC connection between the access device and the terminal. Based on this solution, the terminal may initiate a connection re-establishment procedure on the reserved RRC connection, so that the access device may learn that the terminal is currently initiating the connection re-establishment procedure.

In a possible design, the information about the target mobility management network element includes a globally unique mobility management entity identifier GUMMEI of the target mobility management network element or a globally unique access and mobility management function identifier GUAMI of the target mobility management network element.

In a possible design, that the source network device obtains information about the target network device is specifically: The source network device receives an operation and maintenance OM command, where the OM command carries the information about the target network device; the source network device sends a first request message to a network repository function network element, where the first request message is used to request to obtain the information that is about the target network device and that is required for re-establishing the connection; and the source network device receives a first response message from the network repository function network element, where the first response message carries the information about the target network device; or the source network device receives the information about the target network device from a policy control network element. Based on this solution, the source network device may obtain the information about the target network device.

According to a second aspect, a connection re-establishment method is provided, and the connection re-establishment method includes: A mobility management network element obtains and stores information that is about a target gateway device and that is required for re-establishing a connection that is of a terminal and that corresponds to a first connection identifier; after the mobility management network element receives a session establishment request from the terminal, when a second connection identifier carried in the session establishment request is the same as the first connection identifier, the mobility management network element determines that the terminal is re-establishing the connection; and the mobility management network element sends a request message to the target gateway device based on the information about the target gateway device, where the request message is used to indicate the target gateway device to establish a connection. Based on the connection re-establishment method provided in this embodiment of this application, when determining that the terminal is re-establishing the connection, the mobility management network element may send the request message to the target gateway device based on the information that is about the target gateway device and that is required for re-establishing the connection, where the request message is used to indicate the target gateway device to establish the connection. In other words, based on the connection re-establishment method provided in this embodiment of this application, the connection of the terminal may be re-established to a specified gateway device, thereby meeting a requirement of migrating a connection of a gateway device A to a gateway device B or implementing load balancing between different boards/interfaces/processes of the gateway device in an operation and maintenance scenario such as upgrading, cutover, or load balancing.

In a possible design, the connection re-establishment method further includes: The mobility management network element obtains and stores the first connection identifier.

In a possible design, the target gateway device is a target session management network element, and correspondingly, the first connection identifier includes a data network name DNN corresponding to the connection or a session identifier corresponding to the connection.

In a possible design, the target gateway device is a target data gateway or a target serving gateway, and correspondingly, the first connection identifier includes an access point name APN corresponding to the connection or a default bearer identifier corresponding to the connection.

According to a third aspect, a connection re-establishment method is provided, and the connection re-establishment method includes: An access device obtains and stores information that is about a target mobility management network element and that is required for re-establishing a connection of a terminal; the access device receives, on a radio resource control RRC connection corresponding to the connection, an access request from the terminal; and the access device sends the access request to the target mobility management network element based on the information about the target mobility management network element, where the access request is used to indicate the target mobility management network element to establish a connection. Based on the connection re-establishment method provided in this embodiment of this application, after receiving the information about the target mobility management network element, the access device may store the information about the target mobility management network element, and after receiving, on the RRC connection corresponding to the connection, the access request from the terminal, the access device may send the access request to the target mobility management network element based on the stored information about the target mobility management network element, where the access request is used to indicate the target mobility management network element to establish the connection. In other words, based on the connection re-establishment method provided in this embodiment of this application, the connection of the terminal may be re-established to a specified mobility management network element, thereby meeting a requirement of migrating a connection of a mobility management network element A to a mobility management network element B or implementing load balancing between different boards/interfaces/processes of the mobility management network element in an operation and maintenance scenario such as upgrading, cutover, or load balancing.

In a possible design, the connection re-establishment method further includes: The access device receives third indication information from a source mobility management network element, where the third indication information is used to indicate the access device to reserve the RRC connection corresponding to the connection. Based on this solution, the terminal may initiate a connection re-establishment procedure on the reserved RRC connection, so that the access device may learn that the terminal is currently initiating the connection re-establishment procedure.

According to a fourth aspect, a connection re-establishment method is provided, and the connection re-establishment method includes: A terminal receives information about a target network device, and the terminal initiates, based on the information about the target network device, a procedure of re-establishing a connection of the terminal to the target network device. Based on the connection re-establishment method provided in this embodiment of this application, the connection of the terminal may be re-established to a specified network device, thereby meeting a requirement of migrating a connection of one network device to another network device or implementing load balancing between different boards/interfaces/processes of the network device in an operation and maintenance scenario such as upgrading, cutover, or load balancing.

In a possible design, the connection re-establishment method may further include: The terminal receives a connection re-establishment timer from a source network device. That the terminal initiates, based on the information about the target network device, a procedure of re-establishing a connection of the terminal to the target network device is specifically: The terminal initiates, based on the information about the target network device after the connection re-establishment timer expires, the procedure of re-establishing the connection of the terminal to the target network device. In this way, when connections of a plurality of terminals need to be re-established, the connections of all the terminals may be controlled to be re-established within a specific period of time, thereby avoiding a prior-art problem of overload of another device in a mobile communications network that may be caused when all the terminals simultaneously initiate a connection establishment procedure.

In a possible design, the connection re-establishment method may further include: The terminal receives first indication information from the source network device, where the first indication information is used to indicate the terminal to delete the original connection after the connection is re-established; and the terminal deletes the original connection according to the first indication information after re-establishing the connection. In this embodiment of this application, because the original connection may be deleted after a new connection is established, service continuity can be ensured.

In a possible design, the target network device is a target mobility management network element. The connection re-establishment method may further include: The terminal sends an access request to an access device on an RRC connection corresponding to the connection, where the access request is used to indicate the target mobility management network element to establish the connection. Based on this solution, the terminal may initiate a connection re-establishment procedure on the reserved RRC connection, so that the access device may learn that the terminal is currently initiating the connection re-establishment procedure.

According to a fifth aspect, a source network device is provided, and the source network device has a function of implementing the method in the first aspect. The function may be implemented by hardware, or may be implemented by hardware by executing corresponding software. The hardware or software includes one or more modules corresponding to the foregoing function.

According to a sixth aspect, a source network device is provided, and includes a processor and a memory. The memory is configured to store a computer execution instruction. When the source network device runs, the processor executes the computer execution instruction stored in the memory, so that the source network device performs the connection re-establishment method according to any item of the first aspect.

According to a seventh aspect, a source network device is provided, and includes a processor. The processor is configured to: be coupled to a memory, and after reading an instruction in the memory, perform, according to the instruction, the connection re-establishment method according to any item of the first aspect.

According to an eighth aspect, a computer-readable storage medium is provided. The computer-readable storage medium stores an instruction, and when the instruction is run on a computer, the computer is enabled to perform the connection re-establishment method according to any item of the first aspect.

According to a ninth aspect, a computer program product including an instruction is provided, and when the computer program product runs on a computer, the computer is enabled to perform the connection re-establishment method according to any item of the first aspect.

According to a tenth aspect, an apparatus (for example, the apparatus may be a chip system) is provided, and the apparatus includes a processor, configured to support a source network device in implementing a function involved in the first aspect, for example, determining that a connection of a terminal is to be released, and obtaining information about a target network device. In a possible design, the apparatus further includes a memory, and the memory is configured to store a program instruction and data that are necessary for the source network device. When the apparatus is a chip system, the apparatus may include a chip, or may include a chip and another discrete device.

For technical effects brought by any design manner in the fifth aspect to the tenth aspect, refer to technical effects brought by different design manners in the first aspect. Details are not described herein.

According to an eleventh aspect, a mobility management network element is provided, and the mobility management network element has a function of implementing the method in the second aspect. The function may be implemented by hardware, or may be implemented by hardware by executing corresponding software. The hardware or software includes one or more modules corresponding to the foregoing function.

According to a twelfth aspect, a mobility management network element is provided, and includes a processor and a memory. The memory is configured to store a computer execution instruction. When the mobility management network element runs, the processor executes the computer execution instruction stored in the memory, so that the mobility management network element performs the connection re-establishment method according to any item of the second aspect.

According to a thirteenth aspect, a mobility management network element is provided, and includes a processor. The processor is configured to: be coupled to a memory, and after reading an instruction in the memory, perform, according to the instruction, the connection re-establishment method according to any item of the second aspect.

According to a fourteenth aspect, a computer-readable storage medium is provided. The computer-readable storage medium stores an instruction, and when the instruction is run on a computer, the computer is enabled to perform the connection re-establishment method according to any item of the second aspect.

According to a fifteenth aspect, a computer program product including an instruction is provided, and when the computer program product runs on a computer, the computer is enabled to perform the connection re-establishment method according to any item of the second aspect.

According to a sixteenth aspect, an apparatus (for example, the apparatus may be a chip system) is provided, and the apparatus includes a processor, configured to support a mobility management network element in implementing a function involved in the second aspect, for example, obtaining and storing information that is about a target gateway device and that is required for re-establishing a connection that is of a terminal and that corresponds to a first connection identifier. In a possible design, the apparatus further includes a memory, and the memory is configured to store a program instruction and data that are necessary for the mobility management network element. When the apparatus is a chip system, the apparatus may include a chip, or may include a chip and another discrete device.

For technical effects brought by any design manner in the eleventh aspect to the sixteenth aspect, refer to technical effects brought by different design manners in the second aspect. Details are not described herein.

According to a seventeenth aspect, an access device is provided, and the access device has a function of implementing the method in the third aspect. The function may be implemented by hardware, or may be implemented by hardware by executing corresponding software. The hardware or software includes one or more modules corresponding to the foregoing function.

According to an eighteenth aspect, an access device is provided, and includes a processor and a memory. The memory is configured to store a computer execution instruction. When the access device runs, the processor executes the computer execution instruction stored in the memory, so that the access device performs the connection re-establishment method according to any item of the third aspect.

According to a nineteenth aspect, an access device is provided, and includes a processor. The processor is configured to: be coupled to a memory, and after reading an instruction in the memory, perform, according to the instruction, the connection re-establishment method according to any item of the third aspect.

According to a twentieth aspect, a computer-readable storage medium is provided. The computer-readable storage medium stores an instruction, and when the instruction is run on a computer, the computer is enabled to perform the connection re-establishment method according to any item of the third aspect.

According to a twenty-first aspect, a computer program product including an instruction is provided, and when the computer program product runs on a computer, the computer is enabled to perform the connection re-establishment method according to any item of the third aspect.

According to a twenty-second aspect, an apparatus (for example, the apparatus may be a chip system) is provided, and the apparatus includes a processor, configured to support an access device in implementing a function involved in the third aspect, for example, obtaining and storing information that is about a target mobility management network element and that is required for re-establishing a connection of a terminal. In a possible design, the apparatus further includes a memory, and the memory is configured to store a program instruction and data that are necessary for the access device. When the apparatus is a chip system, the apparatus may include a chip, or may include a chip and another discrete device.

For technical effects brought by any design manner in the seventeenth aspect to the twenty-second aspect, refer to technical effects brought by different design manners in the third aspect. Details are not described herein.

According to a twenty-third aspect, a terminal is provided, and the terminal has a function of implementing the method according to the fourth aspect. The function may be implemented by hardware, or may be implemented by hardware by executing corresponding software. The hardware or software includes one or more modules corresponding to the foregoing function.

According to a twenty-fourth aspect, a terminal is provided, and includes a processor and a memory. The memory is configured to store a computer execution instruction. When the terminal runs, the processor executes the computer execution instruction stored in the memory, so that the terminal performs the connection re-establishment method according to any item of the fourth aspect.

According to a twenty-fifth aspect, a terminal is provided, and includes a processor. The processor is configured to: be coupled to a memory, and after reading an instruction in the memory, perform, according to the instruction, the connection re-establishment method according to any item of the fourth aspect.

According to a twenty-sixth aspect, a computer-readable storage medium is provided. The computer-readable storage medium stores an instruction, and when the instruction is run on a computer, the computer is enabled to perform the connection re-establishment method according to any item of the fourth aspect.

According to a twenty-seventh aspect, a computer program product including an instruction is provided, and when the computer program product runs on a computer, the computer is enabled to perform the connection re-establishment method according to any item of the fourth aspect.

According to a twenty-eighth aspect, an apparatus (for example, the apparatus may be a chip system) is provided. The apparatus includes a processor, configured to support a terminal in implementing a function involved in the fourth aspect, for example, initiating, based on information about a target network device, a procedure of re-establishing a connection of the terminal to the target network device. In a possible design, the apparatus further includes a memory, and the memory is configured to store a program instruction and data that are necessary for the terminal. When the apparatus is a chip system, the apparatus may include a chip, or may include a chip and another discrete device.

For technical effects brought by any design manner in the twenty-third aspect to the twenty-eighth aspect, refer to technical effects brought by different design manners in the fourth aspect. Details are not described herein.

According to a twenty-ninth aspect, a connection re-establishment system is provided, and the connection re-establishment system includes a source gateway device and a mobility management network element. The source gateway device is configured to determine that a connection that is of a terminal and that corresponds to a first connection identifier is to be released. The source gateway device is further configured to: obtain information about a target gateway device, and send the information about the target gateway device to the mobility management network element. The mobility management network element is configured to: receive and store the information about the target gateway device from the source gateway device, and after receiving a session establishment request from the terminal, when a second connection identifier carried in the session establishment request is the same as the first connection identifier, determine that the terminal is re-establishing the connection. The mobility management network element is further configured to send a request message to the target gateway device based on the information about the target gateway device, where the request message is used to indicate the target gateway device to establish a connection.

According to a thirtieth aspect, a connection re-establishment system is provided, and the connection re-establishment system includes a source gateway device and a mobility management network element. The source gateway device is configured to determine that a connection that is of a terminal and that corresponds to a first connection identifier is to be released. The source gateway device is further configured to: obtain information about a target gateway device, and send the information about the target gateway device to the mobility management network element. The mobility management network element is configured to: receive the information about the target gateway device from the source gateway device, and send the information about the target gateway device to the terminal. The mobility management network element is further configured to: receive a session establishment request from the terminal, and when a second connection identifier carried in the session establishment request is the same as the first connection identifier, determine that the terminal is re-establishing the connection. The mobility management network element is further configured to send a request message to the target gateway device based on the information that is about the target gateway device and that is carried in the session establishment request, where the request message is used to indicate the target gateway device to establish a connection.

According to a thirty-first aspect, a connection re-establishment system is provided, and the connection re-establishment system includes a source mobility management network element and an access device. The source mobility management network element is configured to determine that a connection that is of a terminal and that corresponds to a first connection identifier is to be released. The source mobility management network element is further configured to: obtain information about a target mobility management network element, and send the information about the target mobility management network element to the access device. The access device is configured to receive and store the information about the target mobility management network element from the source mobility management network element. The access device is further configured to: receive, on a radio resource control RRC connection corresponding to the connection, an access request from the terminal, and send the access request to the target mobility management network element based on the information about the target mobility management network element, where the access request is used to indicate the target mobility management network element to establish a connection.

According to a thirty-second aspect, a connection re-establishment system is provided, and the connection re-establishment system includes a source mobility management network element and an access device. The source mobility management network element is configured to determine that a connection that is of a terminal and that corresponds to a first connection identifier is to be released. The source mobility management network element is further configured to: obtain information about a target mobility management network element, and send the information about the target mobility management network element to the access device. The access device is configured to: receive the information about the target mobility management network element from the source mobility management network element, and send the information about the target mobility management network element to the terminal. The access device is further configured to: receive, on a radio resource control RRC connection corresponding to the connection, an access request from the terminal, and send the access request to the target mobility management network element based on the information that is about the target mobility management network element and that is carried in the access request, where the access request is used to indicate the target mobility management network element to establish a connection.

These or other aspects of this application are more concise and easier to understand in the descriptions of the following embodiments.

### BRIEF DESCRIPTION OF DRAWINGS

FIG. 1 is a schematic architectural diagram 1 of a connection re-establishment system according to an embodiment of this application;
FIG. 2 is a schematic architectural diagram 2 of a connection re-establishment system according to an embodiment of this application;
FIG. 3 is a schematic diagram of application of a connection re-establishment system in a 5G network according to an embodiment of this application;
FIG. 4 is a schematic diagram of application of a connection re-establishment system in an EPS network according to an embodiment of this application;
FIG. 5 is a schematic diagram of a hardware structure of a communications device according to an embodiment of this application;
FIG. 6a-1 and FIG. 6a-2 are a schematic diagram of a PDU session deletion procedure in a connection re-establishment method 1 according to an embodiment of this application;
FIG. 6b-1 and FIG. 6b-2 are a schematic diagram of a PDU session establishment procedure in a connection re-establishment method 1 according to an embodiment of this application;

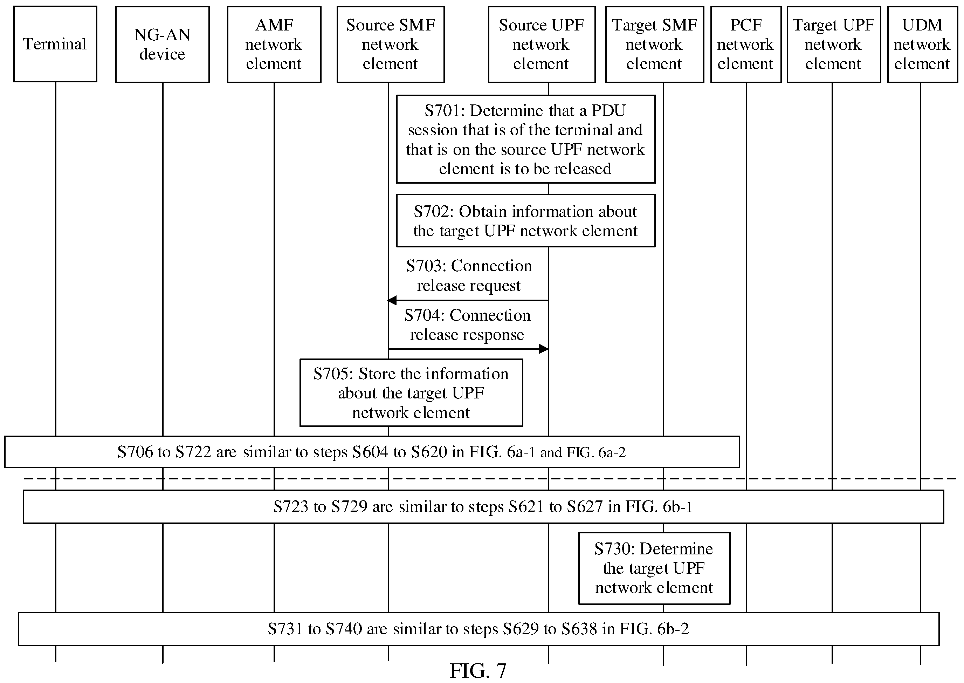

FIG. 7 is a schematic flowchart of a connection re-establishment method 2 according to an embodiment of this application;

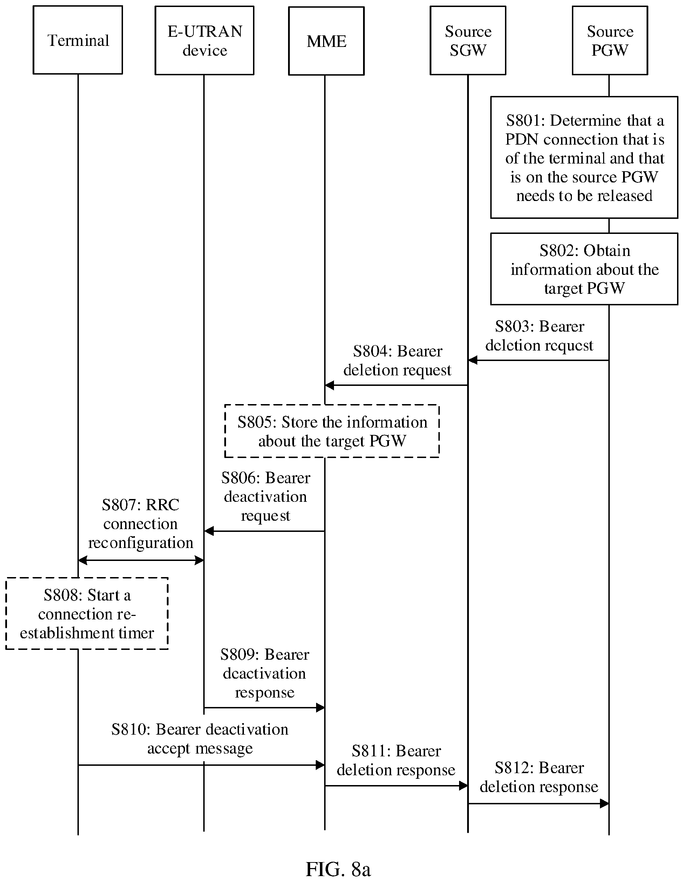

FIG. 8a is a schematic diagram of a PDN connection deletion procedure in a connection re-establishment method 3 according to an embodiment of this application;

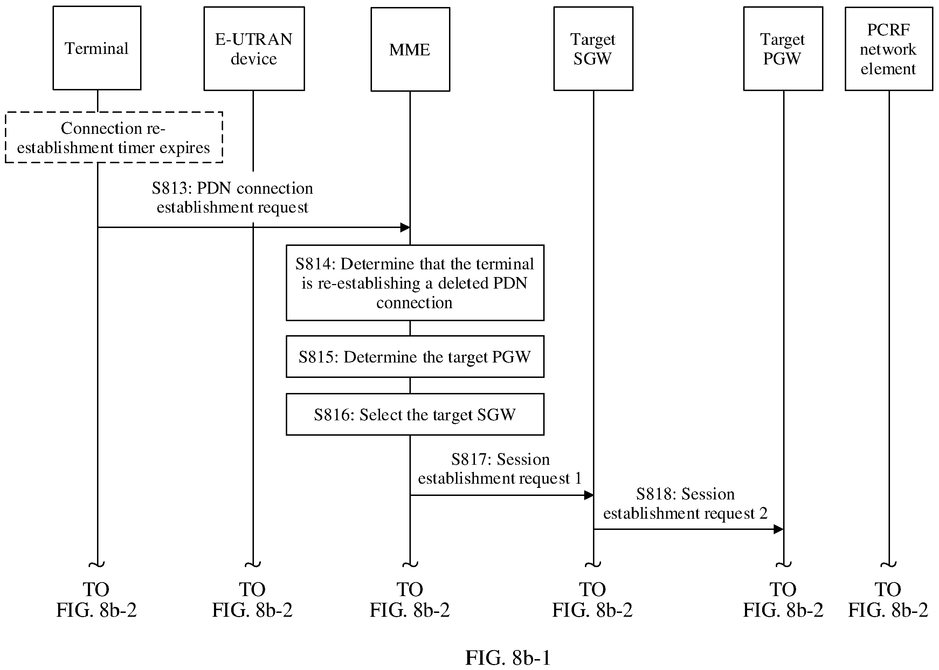

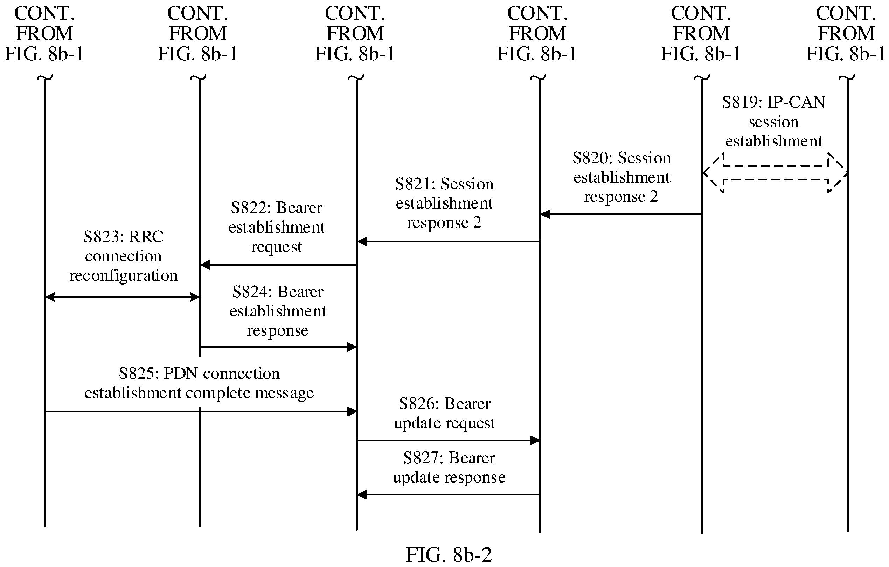

FIG. 8b-1 and -1 FIG. 8b-2 are a schematic diagram of a PDN connection establishment procedure in a connection re-establishment method 3 according to an embodiment of this application;

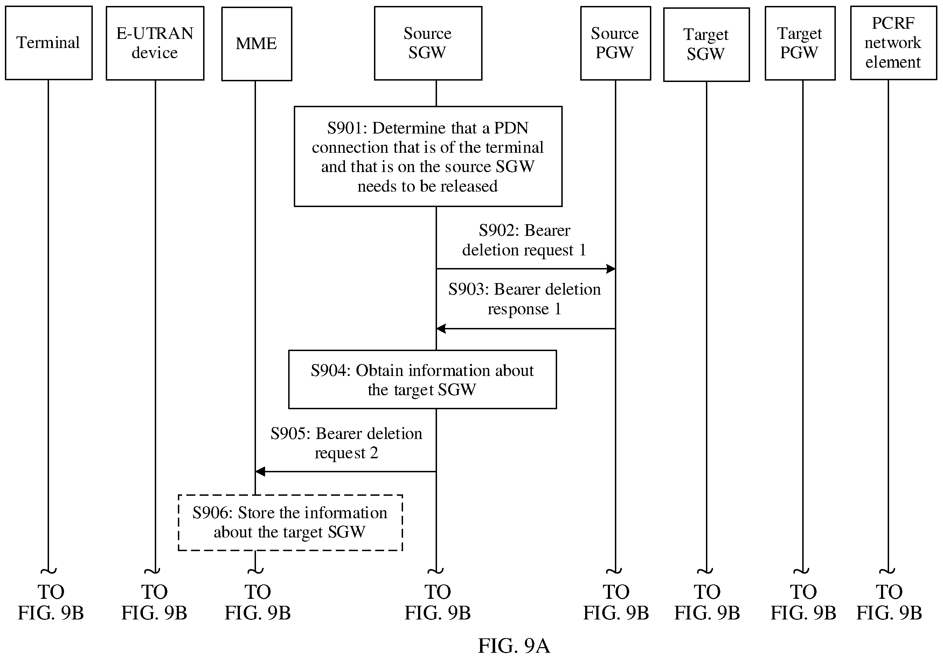

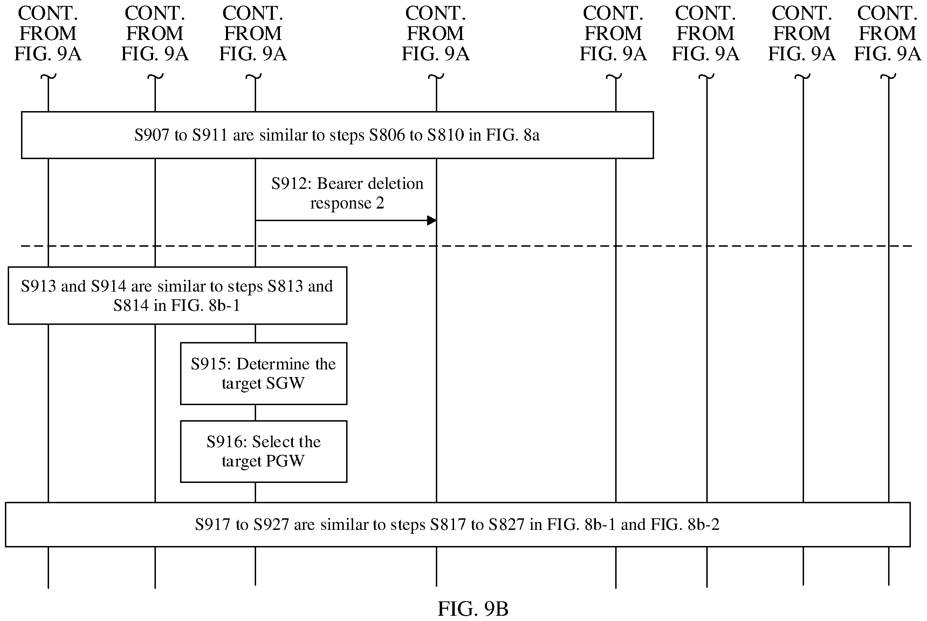

FIG. 9A and FIG. 9B are a schematic flowchart of a connection re-establishment method 4 according to an embodiment of this application;

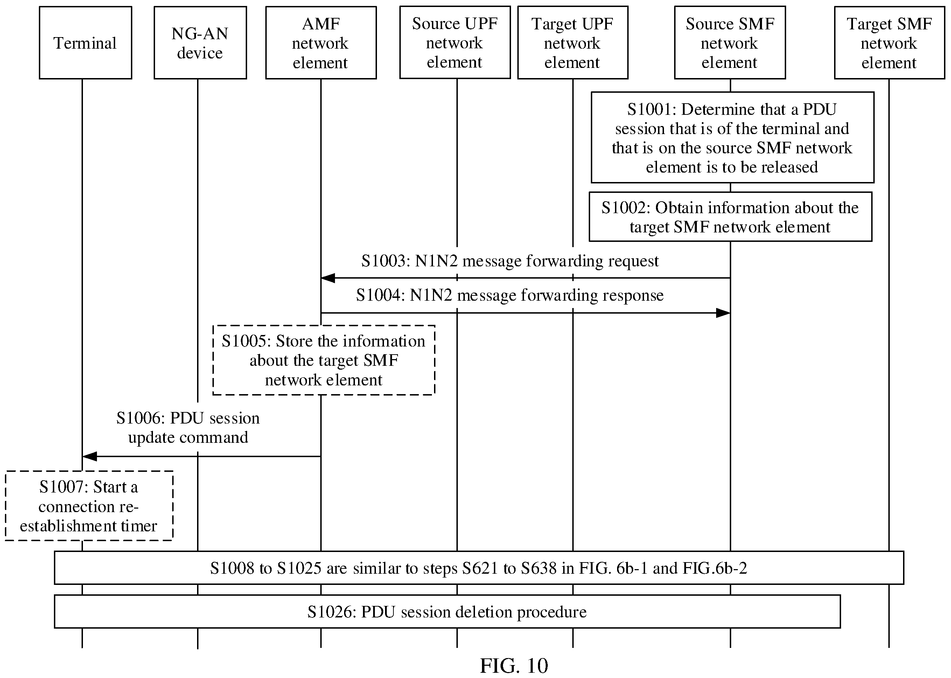

FIG. 10 is a schematic flowchart of a connection re-establishment method 5 according to an embodiment of this application;

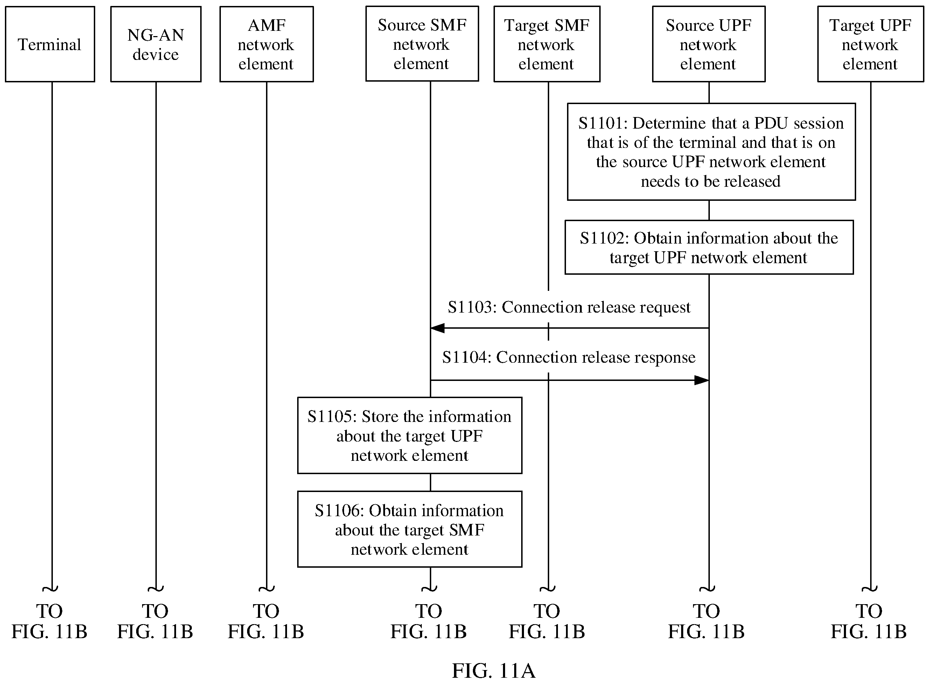

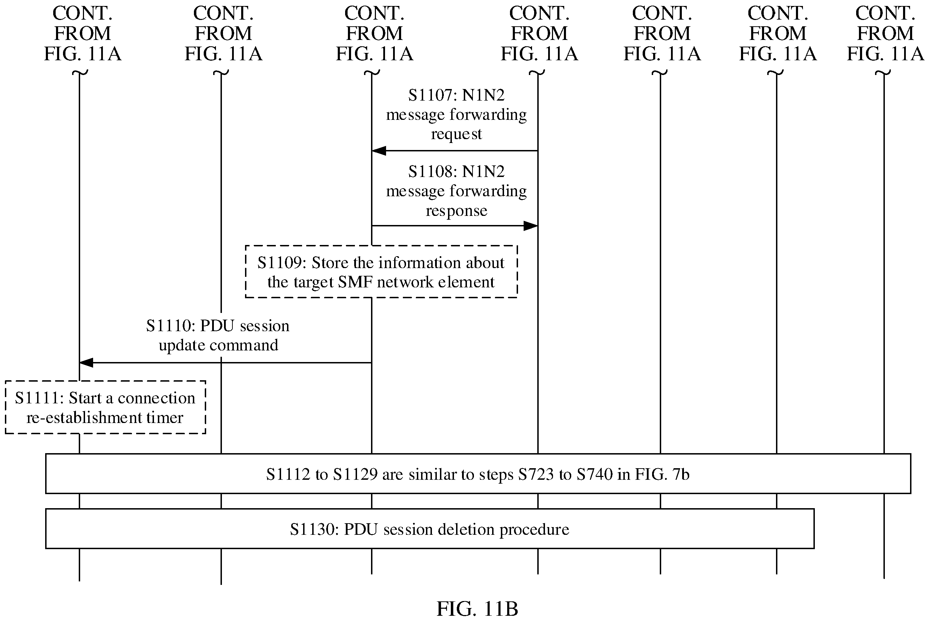

FIG. 11A and FIG. 11B are a schematic flowchart of a connection re-establishment method 6 according to an embodiment of this application;
FIG. 12a-1 and FIG. 12a-2 are a schematic diagram of a deregistration procedure in a connection re-establishment method 7 according to an embodiment of this application;

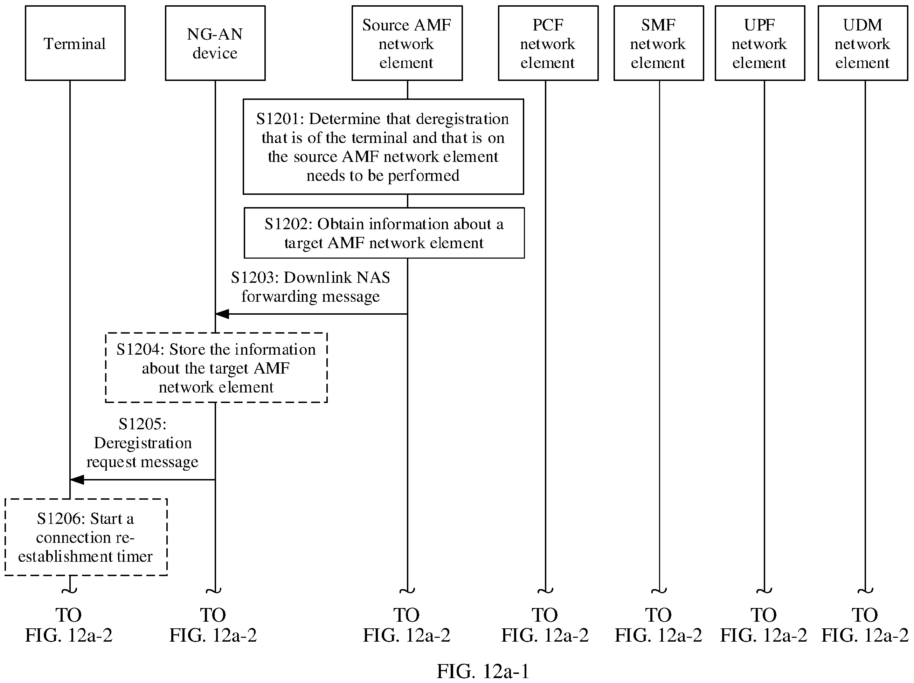

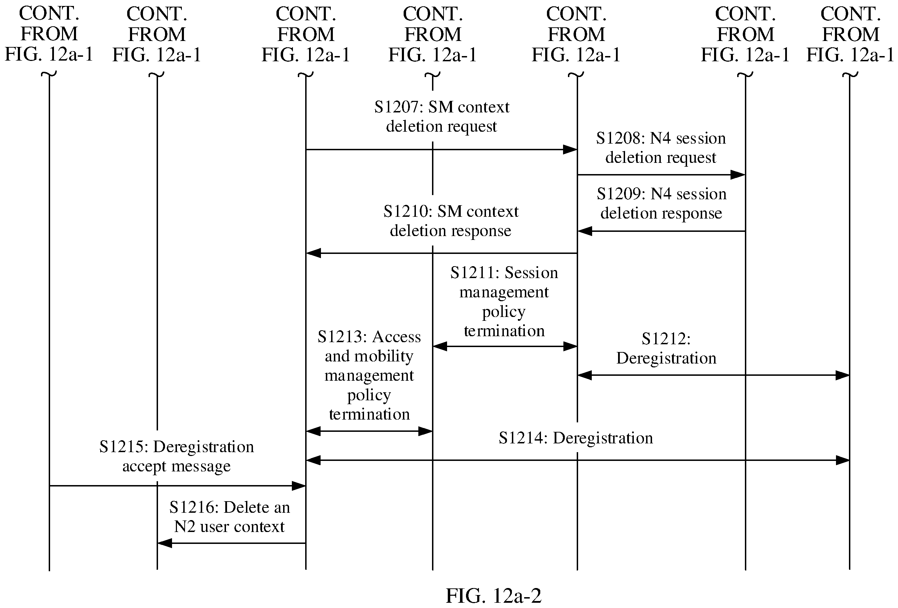

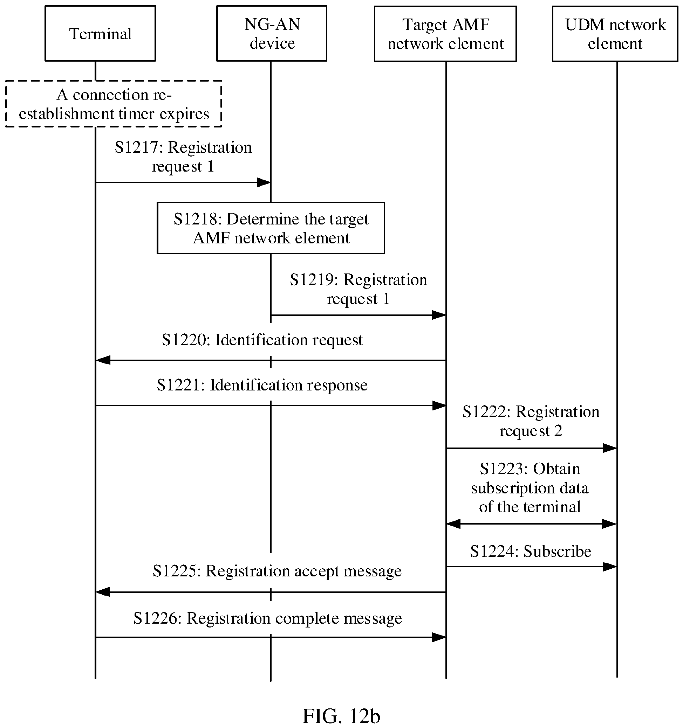

FIG. 12b is a schematic diagram of a registration procedure in a connection re-establishment method 7 according to an embodiment of this application;

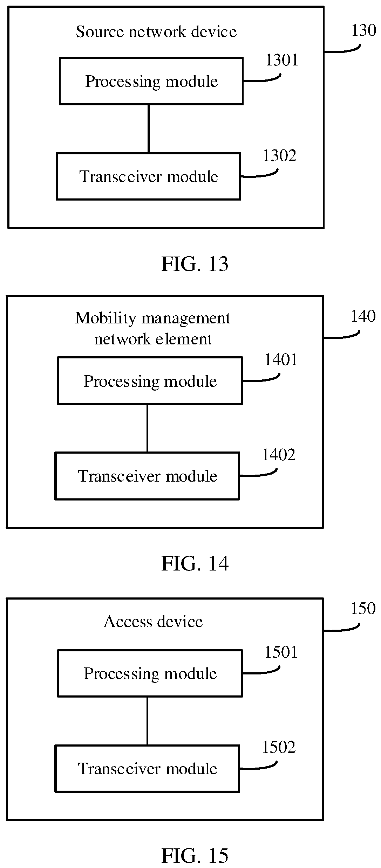

FIG. 13 is a schematic structural diagram of a source network device according to an embodiment of this application;
FIG. 14 is a schematic structural diagram of a mobility management network element according to an embodiment of this application; and
FIG. 15 is a schematic structural diagram of an access device according to an embodiment of this application.

### DESCRIPTION OF EMBODIMENTS

The following describes the technical solutions in embodiments of this application with reference to the accompanying drawings in the embodiments of this application. In the descriptions of this application, unless otherwise stated, "/" indicates an "or" relationship between associated objects, for example, A/B may represent A or B. In this application, "and/or" is merely an association relationship that describes associated objects, and indicates that three relationships may exist. For example, A and/or B may indicate three cases: A exists independently, A and B exist simultaneously, and B exists independently, where A and B may be singular numbers or plural numbers. In addition, in the descriptions of this application, unless otherwise specified, "a plurality of" means two or more than two. "At least one of the following items" or a similar expression means any combination of these items, including any combination of a single item or a plurality of items. For example, at least one of a, b, or c may represent a, b, c, a-b, a-c, b-c, or a-b-c, where a, b, and c may be single, or may be multiple. In addition, for ease of clearly describing the technical solutions in the embodiments of this application, in the embodiments of this application, words such as "first" and "second" are used to distinguish between same items or similar items whose functions and functions are basically the same. A person skilled in the art may understand that words such as "first" and "second" do not limit a quantity and an execution order, and the words such as "first" and "second" do not limit an absolute difference.

In addition, a network architecture and a service scenario described in the embodiments of this application are intended to describe the technical solutions in the embodiments of this application more clearly, and do not constitute a limitation on the technical solutions provided in the embodiments of this application. A person of ordinary skill in the art may learn that, with evolution of the network architecture and emergence of new service scenarios, the technical solutions provided in the embodiments of this application are also applicable to a similar technical problem.

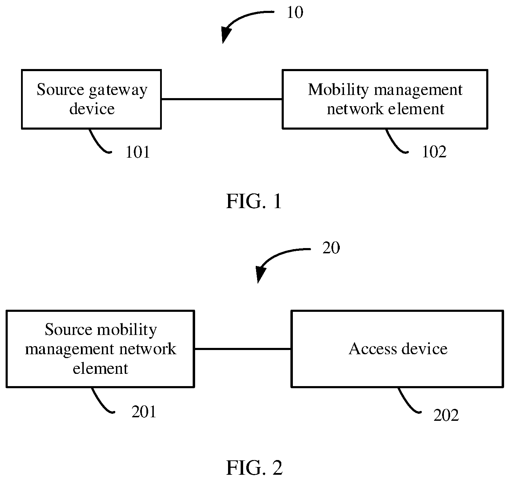

FIG. 1 shows a connection re-establishment system 10 according to an embodiment of this application. The connection re-establishment system 10 includes a source gateway device 101 and a mobility management network element 102.

In a possible implementation,

The source gateway device 101 is configured to determine that a connection that is of a terminal and that corresponds to a first connection identifier is to be released.

The source gateway device 101 is further configured to: obtain information about a target gateway device, and send the information about the target gateway device to the mobility management network element 102.

The mobility management network element 102 is configured to: receive and store the information about the target gateway device from the source gateway device 101, and after receiving a session establishment request from the terminal, when a second connection identifier carried in the session establishment request is the same as the first connection identifier, determine that the terminal is re-establishing the connection.

The mobility management network element 102 is further configured to send a request message to the target gateway device based on the stored information about the target gateway device, where the request message is used to indicate the target gateway device to establish a connection.

In another possible implementation,

The source gateway device 101 is configured to determine that a connection that is of a terminal and that corresponds to a first connection identifier is to be released.

The source gateway device 101 is further configured to: obtain information about a target gateway device, and send the information about the target gateway device to the mobility management network element 102.

The mobility management network element 102 is configured to: receive the information about the target gateway device from the source gateway device 101, and send the information about the target gateway device to the terminal.

The mobility management network element 102 is further configured to: receive a session establishment request from the terminal, and when a second connection identifier carried in the session establishment request is the same as the first connection identifier, determine that the terminal is re-establishing the connection.

The mobility management network element 102 is further configured to send a request message to the target gateway device based on the information that is about the target gateway device and that is carried in the session establishment request, where the request message is used to indicate the target gateway device to establish the connection.

Optionally, the source gateway device and the target gateway device in this embodiment of this application may be a same gateway device, or may be different gateway devices. This is uniformly described herein, and is not specifically limited in this embodiment of this application.

Optionally, in this embodiment of this application, the source gateway device 101 may communicate with the mobility management network element 102 directly or through forwarding of another device. This is not specifically limited in this embodiment of this application.

Based on the connection re-establishment system provided in this embodiment of this application, in this embodiment of this application, after determining that the connection that is of the terminal and that corresponds to the first connection identifier is to be released, the source gateway device may obtain the information about the target gateway device, and send the information about the target gateway device to the mobility management network element, so that the mobility management network element may store or send the information about the target gateway device to the terminal after receiving the information about the target gateway device, and further, after determining that the terminal is re-establishing the connection, the mobility management network element may send the request message to the target gateway device based on the stored information about the target gateway device or the information about the target gateway device from the terminal. The request message is used to indicate the target gateway device to establish the connection. In other words, based on the connection re-establishment system provided in this embodiment of this application, the connection of the terminal may be re-established to a specified gateway device, thereby meeting a requirement of migrating a connection of a gateway device A to a gateway device B or implementing load balancing between different boards/interfaces/processes of the gateway device in an operation and maintenance scenario such as upgrading, cutover, or load balancing.

FIG. 2 shows another connection re-establishment system 20 according to an embodiment of this application. The connection re-establishment system 20 includes a source mobility management network element 201 and an access device 202.

In a possible implementation,

The source mobility management network element 201 is configured to determine that a connection that is of a terminal and that corresponds to a first connection identifier is to be released.

The source mobility management network element 201 is further configured to: obtain information about a target mobility management network element, and send the information about the target mobility management network element to the access device 202.

The access device 202 is configured to receive and store the information about the target mobility management network element from the source mobility management network element 201.

The access device 202 is further configured to: receive, on a radio resource control (radio resource control, RRC) connection corresponding to the connection, an access request from the terminal, and send the access request to the target mobility management network element based on the stored information about the target mobility management network element. The access request is used to indicate the target mobility management network element to establish the connection.

In another possible implementation,

The source mobility management network element 201 is configured to determine that a connection that is of a terminal and that corresponds to a first connection identifier is to be released.

The source mobility management network element 201 is further configured to: obtain information about a target mobility management network element, and send the information about the target mobility management network element to the access device 202.

The access device 202 is configured to: receive the information about the target mobility management network element from the source mobility management network element 201, and send the information about the target mobility management network element to the terminal.

The access device 202 is further configured to: receive, on a radio resource control (radio resource control, RRC) connection corresponding to the connection, an access request from the terminal, and send the access request to the target mobility management network element based on the information that is about the target mobility management network element and that is carried in the access request. The access request is used to indicate the target mobility management network element to establish the connection.

Optionally, the source mobility management network element and the target mobility management network element in this embodiment of this application may be a same mobility management network element, or may be different mobility management network elements. This is uniformly described herein, and is not specifically limited in this embodiment of this application.

Optionally, in this embodiment of this application, the source mobility management network element 201 may communicate with the access device 202 directly or through forwarding of another device. This is not specifically limited in this embodiment of this application.

Based on the connection re-establishment system provided in this embodiment of this application, in this embodiment of this application, after determining that the connection that is of the terminal and that corresponds to the first connection identifier is to be released, the source mobility management network element may obtain the information about the target mobility management network element, and send the information about the target mobility management network element to the access device, so that after receiving the information about the target mobility management network element, the access device may store or send the information about the target mobility management network element to the terminal, and further, after receiving, on the RRC connection corresponding to the connection, the access request from the terminal, the access device may send the access request to the target mobility management network element based on the stored information about the target mobility management network element or the information about the target mobility management network element from the terminal. The access request is used to indicate the target mobility management network element to establish the connection. In other words, based on the connection re-establishment system provided in this embodiment of this application, the connection of the terminal may be re-established to a specified mobility management network element, thereby meeting a requirement of migrating a connection of a mobility management network element A to a mobility management network element B or implementing load balancing between different boards/interfaces/processes of the mobility management network element in an operation and maintenance scenario such as upgrading, cutover, or load balancing.

It should be noted that, the source gateway device in the embodiment shown in FIG. 1 and the source mobility management network element in the embodiment shown in FIG. 2 may be collectively referred to as a source network device. This is uniformly described herein, and is not described below.

Optionally, the connection re-establishment system shown in FIG. 1 or FIG. 2 may be applied to an existing evolved packet system (evolved packet system, EPS) network, a fifth generation (5rd generation, 5G) that is currently being discussed, another future network, or the like. This is not specifically limited in this embodiment of this application.

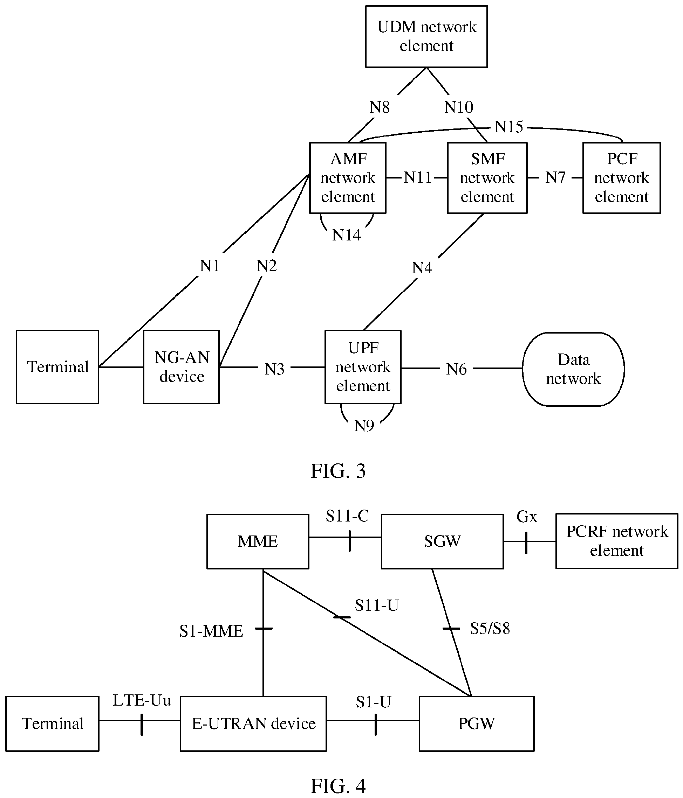

For example, if the connection re-establishment system shown in FIG. 1 or FIG. 2 is applied to the 5G network that is currently being discussed, as shown in FIG. 3, a network element or an entity corresponding to the source gateway device may be a session management function (session management function, SMF) network element in the 5G network, a network element or an entity corresponding to the mobility management network element or the source mobility management network element may be an access and mobility management function (access and mobility management function, AMF) network element in the 5G network, and a network element or an entity corresponding to the access device may be a next-generation access network (next generation access network, NG-AN) device in the 5G network.

In addition, as shown in FIG. 3, the 5G network may further include a user plane function (user plane function, UPF) network element, a unified data management (unified data management, UDM) network element, or a policy control function (policy control function, PCF) network element.

Although not shown, the 5G network may further include an authentication service function (authentication server function, AUSF) network element and the like. This is not specifically limited in this embodiment of this application.

The terminal accesses a network by using the NG-AN device, and the terminal communicates with the AMF network element by using a next-generation network (next generation, N) interface 1 (N1 for short). The NG-AN device communicates with the AMF network element by using an interface N2 (N2 for short), and communicates with the UPF network element by using an interface N3 (N3 for short). The AMF network element communicates with the SMF network element by using an interface N11 (N11 for short), communicates with the UDM network element by using an interface N8 (N8 for short), and communicates with the PCF network element by using an interface N15 (N15 for short). Different AMF network elements communicate with each other by using an interface N14 (N14 for short). The SMF network element communicates with the UPF network element by using an interface N4 (N4 for short), communicates with the UDM network element by using an interface N10 (N10 for short), and communicates with the PCF network element by using an interface N7 (N7 for short). Different UPF network elements communicate with each other by using an interface N9 (N9 for short). The UPF network element accesses a data network by using an interface N6 (N6 for short).

It should be noted that a name of an interface between network elements in FIG. 3 is merely an example. In specific implementation, the name of the interface may be another name. This is not specifically limited in this embodiment of this application.

In addition, it should be noted that a control plane network element such as the AMF network element, the SMF network element, the PCF network element, or the UDM network element in the 5G network shown in FIG. 3 may also perform interaction by using a service interface. For example, a service interface provided by the AMF network element outwards may be Namf, a service interface provided by the SMF network element outwards may be Nsmf, a service interface provided by the PCF network element outwards may be Npcf, and a service interface provided by the UDM network element outwards may be Nudm. For related descriptions, refer to a 5G system architecture (5G system architecture) diagram in the 23501 standard. Details are not described herein.

It should be noted that the NG-AN device, the SMF network element, the AMF network element, the UPF network element, the UDM network element, or the PCF network element in FIG. 3 is merely a name, and the name does not limit the device. In the 5G network and the another future network, a network element or an entity corresponding to the NG-AN device, the SMF network element, the AMF network element, the UPF network element, the UDM network element, the PCF network element, or the like may also be another name. This is not specifically limited in this embodiment of this application. For example, the UPF network element may be alternatively replaced with a UPF entity or a UPF entity. This is uniformly described herein, and is not described below.

Alternatively, for example, if the connection re-establishment system shown in FIG. 1 or FIG. 2 is applied to the existing EPS network, as shown in FIG. 4, a network element or an entity corresponding to the source gateway device may be a serving gateway (Serving Gateway, SGW) or a data gateway (packet data network-Gateway, PGW) in the EPS network, a network element or an entity corresponding to the mobility management network element or the source mobility management network element may be a mobility management entity (Mobility management entity, MME) in the EPS network, and a network element or an entity corresponding to the access device may be an evolved universal mobile telecommunications system (universal mobile telecommunications system, UMTS) territorial radio access network (evolved UMTS territorial radio access network, E-UTRAN) device in the EPS network.

In addition, as shown in FIG. 4, the EPS network may further include a policy and charging rules function (policy and charging rules function, PCRF) network element.

Although not shown, the EPS network may further include a home subscriber server (home subscriber server, HSS) and the like. This is not specifically limited in this embodiment of this application.

The terminal communicates with the E-UTRAN device by using an LTE-Uu interface, the E-UTRAN device communicates with the MME by using an S1-MME interface, the E-UTRAN device communicates with the PGW by using an S1-U interface, the MME communicates with the SGW by using an S11 interface, the PGW communicates with the SGW by using an S5/S8 interface, and the SGW communicates with the PCRF network element by using a Gx interface.

It should be noted that in the EPS network, the gateway device may also be divided into a control plane device and a user plane device, in other words, the serving gateway is divided into a control plane serving gateway and a user plane serving gateway, and the data gateway is divided into a control plane data gateway and a user plane data gateway. For details, refer to an existing EPS architecture in which a user plane and a control plane are separated. Details are not described herein. The following embodiments of this application are merely an example for description by using an example in which the gateway device in the EPS network includes the SGW and the PGW in FIG. 4. These embodiments are also applicable to the EPS architecture in which the user plane and the control plane are separated. This is uniformly described herein, and is not described below.

Optionally, the terminal (terminal) involved in the embodiments of this application may include various handheld devices with a wireless communication function, in-vehicle devices, wearable devices, computing devices, or other processing devices connected to a wireless modem, and may further include a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), or relay user equipment. The relay user equipment may be, for example, a 5G residential gateway (residential gateway, RG). For ease of description, the devices mentioned above are collectively referred to as a terminal in this application.

Optionally, the access device involved in the embodiments of this application is a device that accesses a core network, for example, may be a base station, a broadband network gateway (broadband network gateway, BNG), an aggregation switch, or a non-3rd generation partnership project (3rd generation partnership project, 3GPP) access device. The base station may include stations in various forms, such as a macro base station, a micro base station (also referred to as a small cell), a relay station, an access point, and the like.

Optionally, in the embodiments of this application, the source gateway device or the mobility management network element in FIG. 1 or the source mobility management network element or the access device in FIG. 2 may be implemented by one device, or may be implemented by a plurality of devices together, or may be a function module in a device. This is not specifically limited in this embodiment of this application. It may be understood that the foregoing function may be a network element in a hardware device, a software function running on dedicated hardware, or a virtualized function instantiated on a platform (for example, a cloud platform).

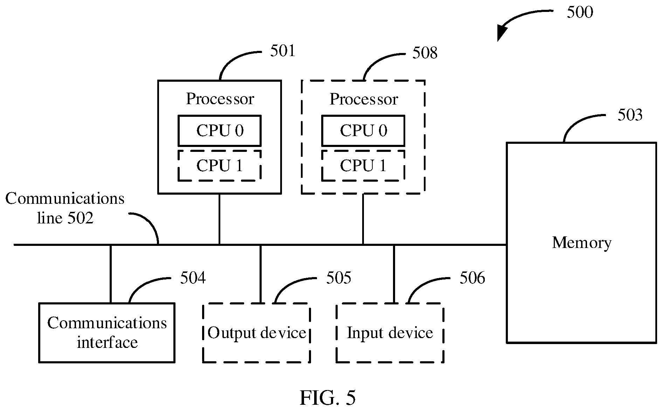

For example, in the embodiments of this application, the source gateway device or the mobility management network element in FIG. 1 or the source mobility management network element or the access device in FIG. 2 may be implemented by a communications device in FIG. 5. FIG. 5 is a schematic diagram of a hardware structure of a communications device according to an embodiment of this application. The communications device 500 includes a processor 501, a communications line 502, a memory 503, and one or more communications interfaces (FIG. 5 is described only by using an example in which the communications device 500 includes a communications interface 504).

The processor 501 may be a general central processing unit (central processing unit, CPU), a microprocessor, an application-specific integrated circuit (application-specific integrated circuit, ASIC), or one or more integrated circuits configured to control program execution of the solutions of this application.

The communications line 502 may include a channel for transmitting information between the foregoing components.

The communications interface 504 is configured to communicate with another device or a communications network such as an Ethernet, a radio access network (radio access network, RAN), or a wireless local area network (wireless local area networks, WLAN) by using any apparatus such as a transceiver.

The memory 503 may be a read-only memory (read-only memory, ROM) or another type of static storage device that can store static information and an instruction, a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Bluray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor by using the communications line 502. The memory may be alternatively integrated with the processor.

The memory 503 is configured to store a computer execution instruction for executing the solutions in this application, and execution is controlled by the processor 501. The processor 501 is configured to execute the computer execution instruction stored in the memory 503, to implement the connection re-establishment method provided in the following embodiments of this application.

Optionally, the computer execution instruction in this embodiment of this application may also be referred to as application program code, and this is not specifically limited in this embodiment of this application.

In specific implementation, in an embodiment, the processor 501 may include one or more CPUs, for example, a CPU 0 and a CPU 1 in FIG. 5.

In specific implementation, in an embodiment, the communications device 500 may include a plurality of processors, for example, the processor 501 and a processor 508 in FIG. 5. Each of these processors may be a single-core (single-CPU) processor, or may be a multi-core (multi-CPU) processor. The processor herein may be one or more devices, circuits, and/or processing cores used for processing data (for example, a computer program instruction).

In specific implementation, in an embodiment, the communications device 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, or a projector (projector). The input device 506 communicates with the processor 501, and may receive user input in a plurality of manners. For example, the input device 506 may be a mouse, a keyboard, a touchscreen device, or a sensing device.

The communications device 500 may be a general device or a dedicated device. In specific implementation, the communications device 500 may be a desktop computer, a portable computer, a network server, a palmtop computer (personal digital assistant, PDA), a mobile phone, a tablet computer, a wireless terminal device, an embedded device, or a device having a similar structure in FIG. 5. A type of the communications device 500 is not limited in this embodiment of this application.

A connection re-establishment method provided in the embodiments of this application is specifically described below with reference to FIG. 1 to FIG. 5.

It should be noted that, in the following embodiments of this application, a name of a message between network elements or a name or the like of each parameter in the message is merely an example, and may also be another name in specific implementation. This is not specifically limited in this embodiment of this application.

First, for example, the connection re-establishment system shown in FIG. 1 is applied to the 5G network shown in FIG. 3, and the connection of the terminal is specifically a packet data unit (packet data unit, PDU) session of the terminal. FIG. 6a-1 and FIG. 6a-2 show a PDU session deletion procedure in a connection re-establishment method according to an embodiment of this application. The PDU session deletion procedure includes the following steps.

S601: A source SMF network element determines that a PDU session that is of a terminal and that is on the source SMF network element is to be released.

Optionally, in this embodiment of this application, when the source SMF network element triggers, for reasons such as upgrading, cutover, or load balancing, deletion of all or some PDU sessions carried by the source SMF network element, the source SMF network element may determine that the PDU session that is of the terminal and that is on the source SMF network element is to be released. This is not specifically limited in this embodiment of this application.

S602: The source SMF network element sends an N4 session deletion request to a source UPF network element managed by the source SMF network element, so that the source UPF network element receives the N4 session deletion request from the source SMF network element, where the N4 session deletion request is used to indicate the source UPF network element to delete the corresponding PDU session.

S603: The source UPF network element sends an N4 session deletion response to the source SMF network element, so that the source SMF network element receives the N4 session deletion response from the source UPF network element.

It should be noted that the source SMF network element in this embodiment of this application may manage a plurality of UPF network elements. This embodiment of this application is described merely by using an example in which the source SMF network element interacts with the source UPF network element managed by the source SMF network element. For another UPF network element managed by the source SMF network element, refer to the foregoing interaction manner between the source UPF network element and the source SMF network element for processing. Details are not described herein.

S604: The source SMF network element obtains information about a target SMF network element.

Optionally, the source SMF network element and the target SMF network element in this embodiment of this application may be a same SMF network element, or may be different SMF network elements. This is not specifically limited in this embodiment of this application. The information about the target SMF network element may include, for example, one or more of a uniform resource identifier (uniform resource identifier, URI) of the target SMF network element, an internet protocol (internet protocol, IP) address of the target SMF network element, or a fully qualified domain name (fully qualified domain name, FQDN) of the target SMF network element. This is not specifically limited in this embodiment of this application. For example, during load balancing between internal boards/processes/interfaces of the source SMF network element, the source SMF network element and the target SMF network element are a same SMF network element, and the information about the target SMF network element may be the FQDN of the target SMF network element, the URI of the target SMF network element, the FQDN and the IP address of the target SMF network element, the URI and the IP address of the target SMF network element, or the like. This is not specifically limited in this embodiment of this application.

Optionally, in this embodiment of this application, that the source SMF network element obtains information about a target SMF network element may be specifically: The source SMF network element receives an operation and maintenance (operation and maintenance, OM) command, where the OM command carries the information about the target SMF network element; or the source SMF network element sends a first request message to a network repository function (network repository function, NRF) network element, and receives a first response message from the NRF network element, where the first request message is used to request to obtain the information about the target SMF network element, and the first response message carries the information about the target SMF network element; or the source SMF network element receives the information about the target SMF network element from a PCF network element; or the like. This is not specifically limited in this embodiment of this application.

Optionally, there is no inevitable execution sequence between step S602 and step S604 in this embodiment of this application. Step S602 may be performed before step S604; or step S604 may be performed before step S602; or step S602 and step S604 may be performed simultaneously. This is not specifically limited in this embodiment of this application.

S605: The source SMF network element sends an N1N2 message forwarding request to an AMF network element, so that the AMF network element receives the N1N2 message forwarding request from the source SMF network element.

The N1N2 message forwarding request carries the information about the target SMF network element, and the information about the target SMF network element is used to re-establish (reactive) the PDU session to the target SMF network element.

Optionally, in this embodiment of this application, the N1N2 message forwarding request may further carry a connection re-establishment timer, and the connection re-establishment timer is used to indicate a time in which the terminal re-establishes the PDU session. The connection re-establishment timer is randomly allocated by the source SMF network element. For example, the time may be in a range of 1 to 60 minutes. This is not specifically limited in this embodiment of this application.

In addition, the N1N2 message forwarding request may further carry a PDU session deletion command to be sent to the terminal. This is not specifically limited in this embodiment of this application.

S606: The AMF network element sends an N1N2 message forwarding response to the source SMF network element, so that the source SMF network element receives the N1N2 message forwarding response from the AMF network element.

S607: Optionally, the AMF network element stores the information about the target SMF network element.

Specifically, in this embodiment of this application, the AMF network element may obtain and store a first connection identifier corresponding to the PDU session in a process of establishing the PDU session. Further, in this case, the AMF network element may bind the target SMF network element and the first connection identifier, in other words, may establish a correspondence between the first connection identifier and the target SMF network element. This is not specifically limited in this embodiment of this application.

In this embodiment of this application, the first connection identifier may be a data network name (data network name, DNN) corresponding to the PDU session or a session identifier corresponding to the PDU session. This is not specifically limited in this embodiment of this application.

S608: The AMF network element sends an N2 resource release request to an NG-AN device, so that the NG-AN device receives the N2 resource release request from the AMF network element. The N2 resource release request is used to request the NG-AN device to delete an N2 resource corresponding to the PDU session. In addition, the N2 resource release request further carries a PDU session deletion command that is from the SMF network element and that is to be sent to the terminal.

Optionally, if the N1N2 message forwarding request further carries the connection re-establishment timer, the PDU session deletion command in this embodiment of this application may further carry the connection re-establishment timer. This is not specifically limited in this embodiment of this application.

Optionally, in this embodiment of this application, if the information about the target SMF network element does not need to be stored by the AMF network element, but is to be sent to the terminal, the PDU session deletion command in this embodiment of this application may further carry the information about the target SMF network element. This is not specifically limited in this embodiment of this application.

S609: The NG-AN device forwards the PDU session deletion command to the terminal, so that the terminal receives the PDU session deletion command from the SMF network element.

S610: Optionally, if the PDU session deletion command includes the connection re-establishment timer, the terminal starts the connection re-establishment timer.

Optionally, in this embodiment of this application, the terminal may start the connection re-establishment timer after receiving the connection re-establishment timer, or may start the connection re-establishment timer after the PDU session deletion procedure ends. This is not specifically limited in this embodiment of this application.

S611: After the NG-AN device deletes the N2 resource corresponding to the PDU session, the NG-AN device sends an N2 resource release acknowledgement to the AMF network element, so that the AMF network element receives the N2 resource release acknowledgement from the NG-AN device.

The N2 resource release acknowledgement carries N2 session management information. For details, refer to an existing implementation. Details are not described herein.

S612: The AMF network element sends a session management (session management, SM) context update request 1 to the source SMF network element, so that the source SMF network element receives the SM context update request 1 from the AMF network element.

The SM context update request 1 carries the N2 session management information. For details, refer to an existing implementation. Details are not described herein.

S613: The source SMF network element sends an SM context update response 1 to the AMF network element, so that the AMF network element receives the SM context update response 1 from the source SMF network element.

S614: After the terminal deletes the corresponding PDU session, the terminal sends a PDU session deletion acknowledgement to the NG-AN device, so that the NG-AN device receives the PDU session deletion acknowledgement from the terminal.

S615: The NG-AN device sends an uplink non-access stratum (Non-access stratum, NAS) forwarding message to the AMF network element, so that the AMF network element receives the uplink NAS forwarding message from the NG-AN device.

The uplink NAS forwarding message carries the PDU session deletion acknowledgement in step S614.

S616: The AMF network element sends an SM context update request 2 to the source SMF network element, so that the source SMF network element receives the SM context update request 2 from the AMF network element.

The SM context update request 2 carries the PDU session deletion acknowledgement.

S617: The source SMF network element sends an SM context update response 2 to the AMF network element, so that the AMF network element receives the SM context update response 2 from the source SMF network element.

S618: The source SMF network element sends an SM context status notification to the AMF network element, so that the AMF network element receives the SM context status notification from the source SMF network element.

The SM context status notification is used to indicate the AMF network element to delete a resource corresponding to the PDU session.

S619: The AMF network element sends an SM context status notification response to the source SMF network element, so that the source SMF network element receives the SM context status notification response from the AMF network element.

S620: Delete, between the SMF network element and the PCF network element, a session management policy associated with the PDU session.

For specific implementation of step S620, refer to an existing implementation. Details are not described herein.

In this case, the PDU session deletion procedure in the connection re-establishment method in this embodiment of this application ends.

Further, after the PDU session deletion procedure shown in FIG. 6a-1 and FIG. 6a-2 ends, FIG. 6b-1 and FIG. 6b-2 show a PDU session establishment procedure in the connection re-establishment method in this embodiment of this application. The PDU session establishment procedure includes the following steps.

S621: The terminal sends a PDU session establishment request to the AMF network element by using the NG-AN device, so that the AMF network element receives the PDU session establishment request from the terminal. The PDU session establishment request carries a second connection identifier.

In this embodiment of this application, the second connection identifier may be, for example, a DNN corresponding to a to-be-established PDU session; or the second connection identifier may be, for example, a session identifier corresponding to a deleted PDU session. This is not specifically limited in this embodiment of this application. When the second connection identifier is the session identifier corresponding to the deleted PDU session, the PDU session establishment request further carries a session identifier corresponding to the to-be-established PDU session. This is not specifically limited in this embodiment of this application.

Optionally, in this embodiment of this application, if the terminal can receive the information about the target SMF network element, the PDU session establishment request may further carry the information about the target SMF network element. This is not specifically limited in this embodiment of this application.

Optionally, in this embodiment of this application, if the terminal has started the connection re-establishment timer, the terminal may send the PDU session establishment request to the AMF network element by using the NG-AN device after the connection re-establishment timer expires. In this way, when PDU sessions of a plurality of terminals need to be re-established, the PDU sessions of all the terminals may be controlled to be re-established within a specific period of time, thereby avoiding a prior-art problem of overload of another device in a mobile communications network that may be caused when all the terminals simultaneously initiate a PDU session establishment procedure. Certainly, in this embodiment of this application, if the terminal has not started the connection re-establishment timer, the terminal may send the PDU session establishment request to the AMF network element by using the NG-AN device after receiving the PDU session deletion command or after the PDU session deletion procedure ends. For details, refer to an existing PDU session re-establishment procedure. Details are not described herein.

S622: When the second connection identifier carried in the PDU session establishment request is the same as the first connection identifier, the AMF network element determines that the terminal is re-establishing the deleted PDU session.

For example, if a DNN corresponding to the deleted PDU session is the same as the DNN corresponding to the to-be-established PDU session, the AMF network element determines that the terminal is re-establishing the deleted PDU session; or if the session identifier corresponding to the deleted PDU session is the same as the session identifier carried in the to-be-established PDU session, the AMF network element determines that the terminal is re-establishing the deleted PDU session.

S623: The AMF network element determines the target SMF network element corresponding to the PDU session.

Optionally, in this embodiment of this application, the AMF network element may determine, based on the stored information about the target SMF network element corresponding to the PDU session, the target SMF network element corresponding to the PDU session, or may determine, based on the information that is about the target SMF network element and that is carried in the PDU session establishment request in step S621, the target SMF network element corresponding to the PDU session. This is not specifically limited in this embodiment of this application.

S624: The AMF network element sends an SM context setup request to the target SMF network element, so that the target SMF network element receives the SM context setup request from the AMF network element, where the SM context setup request is used to indicate the target SMF network element to establish the corresponding PDU session.

S625: The target SMF network element obtains, from a UDM network element, session management subscription data related to the PDU session. For related implementation, refer to an existing implementation. Details are not described herein.

S626: The target SMF network element sends an SM context setup response to the AMF network element, so that the AMF network element receives the SM context setup response from the target SMF network element.

S627: The target SMF network element obtains, from the PCF network element, a session management policy related to the PDU session. For related implementation, refer to an existing implementation. Details are not described herein.

S628: The target SMF network element selects a target UPF network element.

Optionally, the target UPF network element in this embodiment of this application may be a same UPF network element as the source UPF network element in FIG. 6a-1 and FIG. 6a-2, or may be a different UPF network element. This is not specifically limited in this embodiment of this application.

S629: The target SMF network element sends an N4 session establishment request to the target UPF network element, so that the target UPF network element receives the N4 session establishment request from the target SMF network element.

S630: The target UPF network element sends an N4 session establishment response to the target SMF network element, so that the target SMF network element receives the N4 session establishment response from the target UPF network element.

S631: The target SMF network element sends an N1N2 message forwarding request to the AMF network element, so that the AMF network element receives the N1N2 message forwarding request from the target SMF network element.

The N1N2 message forwarding request carries N2 session management information to be sent to the NG-AN device and a PDU session establishment accept message to be sent to the terminal.

S632: The AMF network element sends an N1N2 message forwarding response to the target SMF network element, so that the target SMF network element receives the N1N2 message forwarding response from the AMF network element.

S633: The AMF network element sends a PDU session resource establishment request to the NG-AN device, so that the NG-AN device receives the PDU session resource establishment request from the AMF network element.

The PDU session resource establishment request is used to request the NG-AN device to allocate a resource to the PDU session. In addition, the PDU session resource establishment request further carries the N2 session management information in step S631.

S634: The NG-AN device forwards the PDU session establishment accept message to the terminal, so that the terminal receives the PDU session establishment accept message from the SMF network element.

S635: The NG-AN device sends a PDU session resource establishment response to the AMF network element, so that the AMF network element receives the PDU session resource establishment response from the PDU session resource establishment response.

The PDU session resource establishment response carries user plane packet forwarding information allocated by the NG-AN device. For related implementation, refer to an existing implementation. Details are not described herein.

S636: The AMF network element sends an SM context update request to the target SMF network element, so that the target SMF network element receives the SM context update request from the AMF network element.

The SM context update request carries the user plane packet forwarding information allocated by the NG-AN device. For related implementation, refer to an existing implementation. Details are not described herein.

S637: Update an N4 session between the target SMF network element and the target UPF network element.

Specifically, the target SMF network element may send, to the target UPF network element, the user plane packet forwarding information allocated by the NG-AN device, so that after receiving a downlink user plane packet related to the terminal, the target UPF network element may send the downlink user plane packet to the NG-AN device by using the user plane packet forwarding information allocated by the NG-AN device. For related implementation, refer to an existing implementation. Details are not described herein.

S638: The target SMF network element sends an SM context update response to the AMF network element, so that the AMF network element receives the SM context update response from the target SMF network element.

In this case, the PDU session establishment procedure in the connection re-establishment method in this embodiment of this application ends.

Based on the connection re-establishment method provided in this embodiment of this application, the connection of the terminal may be re-established to a specified SMF network element, thereby meeting a requirement of migrating a connection of one SMF network element to another SMF network element or implementing load balancing between different boards/interfaces/processes of a single SMF network element in an operation and maintenance scenario such as upgrading, cutover, or load balancing.

Actions of the source SMF network element or the AMF network element in steps S601 to S638 may be performed by the processor 501 in the communications device 500 shown in FIG. 5 by invoking the application program code stored in the memory 503. This is not limited in this embodiment.

Optionally, for example, the connection re-establishment system shown in FIG. 1 is applied to the 5G network shown in FIG. 3, and the connection of the terminal is specifically a PDU session of the terminal. FIG. 7 shows a connection re-establishment method according to an embodiment of this application. The connection re-establishment method includes the following steps.

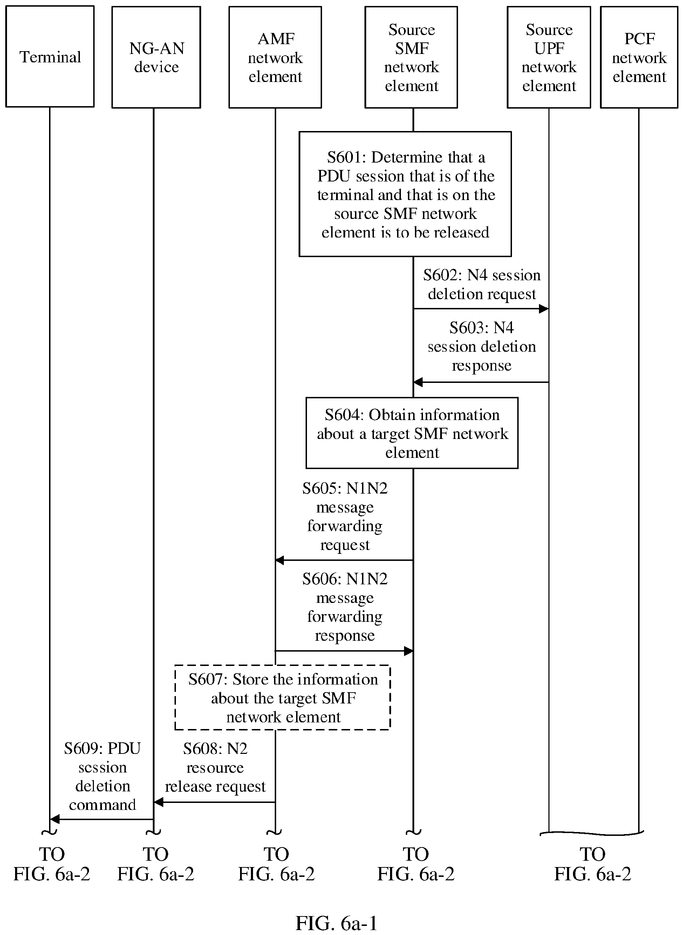

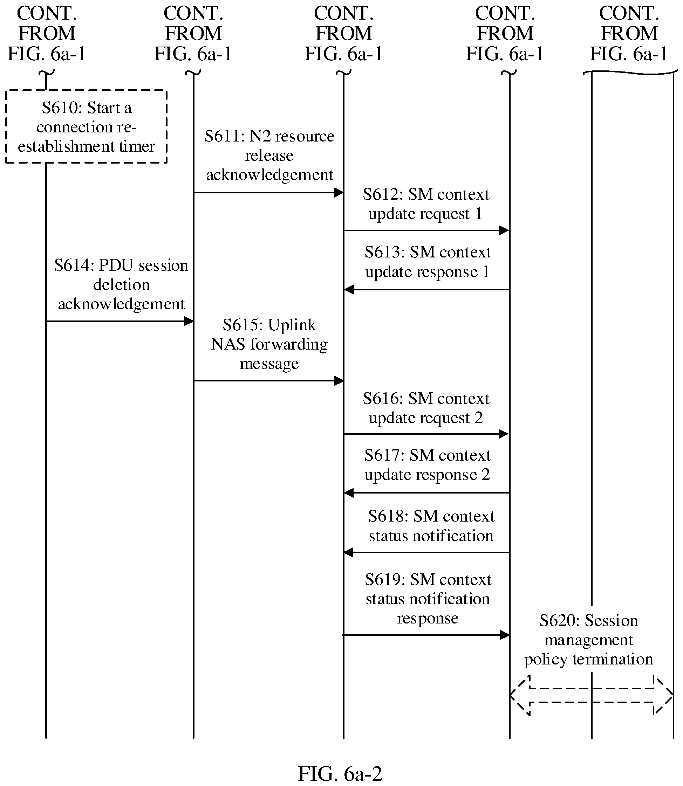

S701 is similar to step S601 in the embodiment shown in FIG. 6a-1. A difference lies in, for example, that the source SMF network element in step S601 is replaced with a source UPF network element in this embodiment of this application. For other related descriptions, refer to the embodiment shown in FIG. 6a-1 and FIG. 6a-2. Details are not described herein.

Optionally, the source UPF network element and a target UPF network element in this embodiment of this application may be a same UPF network element, or may be different UPF network elements. This is not specifically limited in this embodiment of this application.

S702 is similar to step S604 in the embodiment shown in FIG. 6a-1. A difference lies in, for example, that the source SMF network element in step S604 is replaced with the source UPF network element in this embodiment of this application, and the target SMF network element in step S601 is replaced with the target UPF network element in this embodiment of this application. For other related descriptions, refer to the embodiment shown in FIG. 6a-1 and FIG. 6a-2. Details are not described herein.

S703: The source UPF network element sends a connection release request to a source SMF network element that manages the source UPF network element, so that the source SMF network element receives the connection release request from the source UPF network element.

The connection release request carries the information about the target UPF network element, and is used to indicate the source SMF network element to release the PDU session that is of the terminal and that is on the source UPF network element, and re-establish the PDU session to the target UPF network element.

Optionally, the connection release request in this embodiment of this application may be, for example, a packet forwarding control protocol (packet forwarding control protocol, PFCP) association release request. This is not specifically limited in this embodiment of this application.

S704: The source SMF network element sends a connection release response to the source UPF network element, so that the source UPF network element receives the connection release response from the source SMF network element.

Optionally, the connection release response in this embodiment of this application may be, for example, a PFCP association release response. This is not specifically limited in this embodiment of this application.

S705: The source SMF network element stores the information about the target UPF network element.

Specifically, in this embodiment of this application, the source SMF network element may obtain and store a first connection identifier corresponding to the PDU session in a process of establishing the PDU session. Further, in this case, the source SMF network element may bind the target UPF network element and the first connection identifier, in other words, may establish a correspondence between the first connection identifier and the target UPF network element. This is not specifically limited in this embodiment of this application. For related descriptions of the first connection identifier, refer to the embodiment shown in FIG. 6a-1 and FIG. 6a-2. Details are not described herein.

S706 to S722 are the same as steps S604 to S620 in the embodiment shown in FIG. 6a-1 and FIG. 6a-2. For related descriptions, refer to the embodiment shown in FIG. 6a-1 and FIG. 6a-2. Details are not described herein.

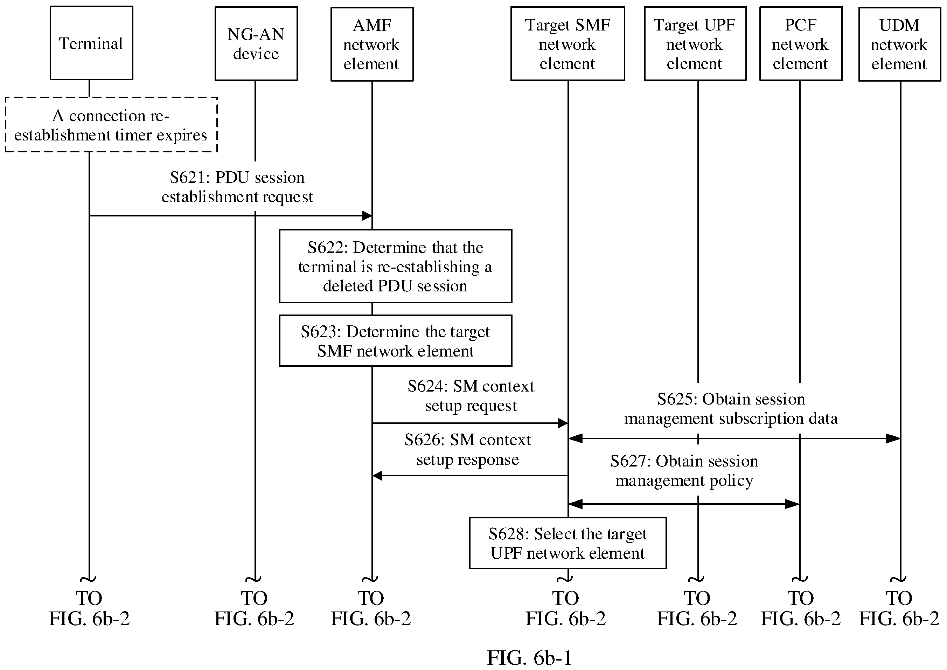

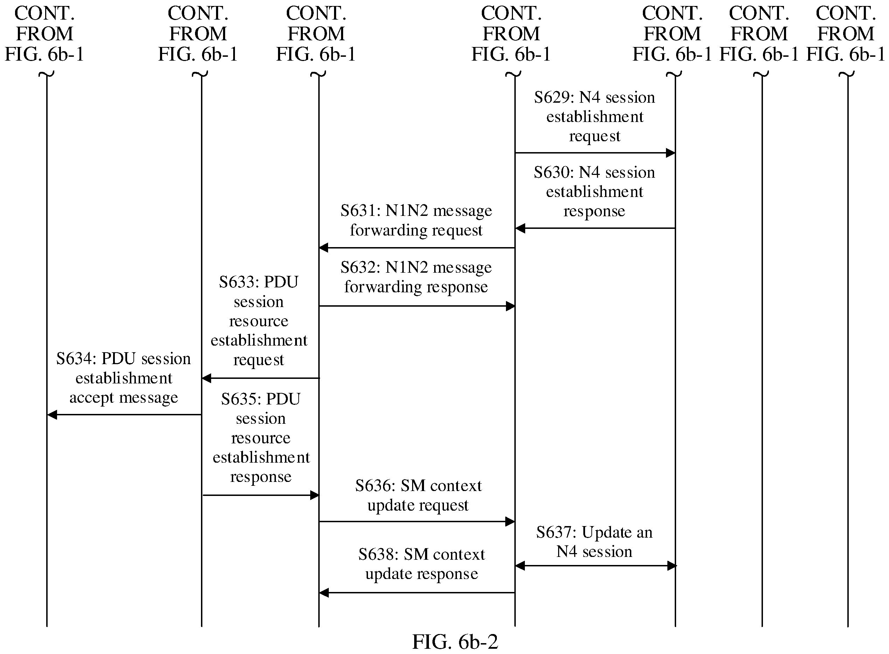

S723 to S729 are the same as steps S621 to S627 in the embodiment shown in FIG. 6b-1. For related descriptions, refer to the embodiment shown in FIG. 6b-1 and -1 and FIG. 6b-2. Details are not described herein.

S730: The target SMF network element determines a target UPF network element.

Optionally, in a possible implementation, when the source SMF network element and the target SMF network element are different SMF network elements, the target SMF network element may determine the target UPF network element in an existing manner of selecting a UPF network element, and the target UPF network element may be the same as or may be different from the target UPF network element in step S702. This is not specifically limited in this embodiment of this application.

Alternatively, optionally, in a possible implementation, if the source SMF network element and the target SMF network element are a same SMF network element, and a second connection identifier carried in the SM context setup request received by the target SMF network element (or the source SMF network element) from the AMF network element is the same as the first connection identifier stored in the target SMF network element (or the source SMF network element), the target SMF network element (or the source SMF network element) may determine that the terminal is re-establishing a deleted PDU session. Further, the target SMF network element (or the source SMF network element) may determine the target UPF network element based on the stored information that is about the target UPF network element and that corresponds to the PDU session. This is not specifically limited in this embodiment of this application.

S731 to S740 are the same as steps S629 to S638 in the embodiment shown in FIG. 6b-2. For related descriptions, refer to the embodiment shown in FIG. 6b-1 and -1 and FIG. 6b-2. Details are not described herein.

Based on the connection re-establishment method provided in this embodiment of this application, the connection of the terminal may be re-established to a specified SMF network element and a specified UPF network element, thereby meeting a requirement of migrating a connection of one UPF network element to another UPF network element or implementing load balancing between different boards/interfaces/processes of a single UPF network element in an operation and maintenance scenario such as upgrading, cutover, or load balancing.

Actions of the source UPF network element or the AMF network element in steps 701 to S740 may be performed by the processor 501 in the communications device 500 shown in FIG. 5 by invoking the application program code stored in the memory 503. This is not limited in this embodiment.

Optionally, for example, the connection re-establishment system shown in FIG. 1 is applied to the EPS network shown in FIG. 4, and the connection of the terminal is specifically a packet data network (packet data network, PDN) connection of the terminal. FIG. 8a shows a PDN connection deletion procedure in a connection re-establishment method according to an embodiment of this application. The PDN connection deletion procedure includes the following steps.

S801: A source PGW determines that a PDN connection that is of a terminal and that is on the source PGW is to be released.

Optionally, in this embodiment of this application, when the source PGW triggers, for reasons such as upgrading, cutover, or load balancing, deletion of all or some PDN connections carried by the source PGW, the source PGW may determine that the PDN connection that is of the terminal and that is on the source PGW is to be released. This is not specifically limited in this embodiment of this application.

S802: The source PGW obtains information about a target PGW.

Optionally, the source PGW and the target PGW in this embodiment of this application may be a same PGW, or may be different PGWs. This is not specifically limited in this embodiment of this application. For example, the information about the target PGW may include one or more of a URI of the target PGW, an IP address of the target PGW, or an FQDN of the target PGW. This is not specifically limited in this embodiment of this application. For example, during load balancing between internal boards/processes/interfaces of the source PGW, the source PGW and the target PGW are a same PGW, and the information about the target PGW may be the FQDN of the target PGW, the URI of the target PGW, the FQDN and the IP address of the target PGW, the URI and the IP address of the target PGW, or the like. This is not specifically limited in this embodiment of this application.

Optionally, in this embodiment of this application, that the source PGW obtains information about a target PGW may be specifically: The source PGW receives an OM command, where the OM command carries the information about the target PGW; or the source PGW receives the information about the target PGW from a PCRF network element; or the like. This is not specifically limited in this embodiment of this application.

S803: The source PGW sends a bearer deletion request to a source SGW, so that the source SGW receives the bearer deletion request from the source PGW.

The bearer deletion request carries the information about the target PGW, and is used to delete a PDN connection of the terminal and re-establish the PDN connection to the target PGW.

Optionally, in this embodiment of this application, the bearer deletion request may further carry a connection re-establishment timer, and the connection re-establishment timer is used to indicate a time in which the terminal re-establishes the PDN connection. The connection re-establishment timer is randomly allocated by the source PGW. For example, the time may be in a range of 1 to 60 minutes. This is not specifically limited in this embodiment of this application.

S804: The source PGW sends the bearer deletion request to an MME, so that the MME receives the bearer deletion request from the source SGW.

S805: Optionally, the MME stores the information about the target PGW.

Specifically, in this embodiment of this application, the MME may obtain and store a first connection identifier corresponding to the PDN connection in a process of establishing the PDN connection. Further, in this case, the MME may bind the target PGW and the first connection identifier, in other words, may establish a correspondence between the first connection identifier and the target PGW. This is not specifically limited in this embodiment of this application.

In this embodiment of this application, the first connection identifier may be an access point name (access point name, APN) corresponding to the PDN connection or a default bearer identifier corresponding to the PDN connection. This is not specifically limited in this embodiment of this application.

S806: The MME sends a bearer deactivation request to an E-UTRAN device, so that the E-UTRAN device receives the bearer deactivation request from the MME. The bearer deactivation request is used to request the E-UTRAN device to delete a resource corresponding to the PDN connection. In addition, the bearer deactivation request further carries a PDN connection deletion command to be sent to the terminal.

Optionally, if the bearer deletion request further carries the connection re-establishment timer, the PDN connection deletion command in this embodiment of this application may further carry the connection re-establishment timer. This is not specifically limited in this embodiment of this application.

Optionally, in this embodiment of this application, if the information about the target PGW does not need to be stored by the MME, but is to be sent to the terminal, the PDN connection deletion command in this embodiment of this application may further carry the information about the target PGW. This is not specifically limited in this embodiment of this application.

S807: Reconfigure an RRC connection between the terminal and the E-UTRAN device.

In an RRC connection reconfiguration process, the E-UTRAN device sends the PDN connection deletion command to the terminal. For related implementation, refer to an existing RRC connection reconfiguration procedure. Details are not described herein.

S808: Optionally, if the PDN connection deletion command includes the connection re-establishment timer, the terminal starts the connection re-establishment timer.

Optionally, in this embodiment of this application, the terminal may start the connection re-establishment timer after receiving the connection re-establishment timer, or may start the connection re-establishment timer after the PDN connection deletion procedure ends. This is not specifically limited in this embodiment of this application.

S809: After the E-UTRAN deletes the resource corresponding to the PDN connection, the E-UTRAN device sends a bearer deactivation response to the MME, so that the MME receives the bearer deactivation response from the E-UTRAN device.

S810: After the terminal deletes the corresponding PDN connection, the terminal sends a bearer deactivation accept message to the MME, so that the MME receives the bearer deactivation accept message from the terminal.

The bearer deactivation accept message is used to indicate that the PDN connection has been successfully deleted from the terminal.

S811: The MME sends a bearer deletion response to the source SGW, so that the source SGW receives the bearer deletion response from the MME.

The bearer deletion response is used to confirm that the PDN connection has been deleted.

S812: The source SGW sends the bearer deletion response to the source PGW, so that the source PGW receives the bearer deletion response from the source SGW.

In this case, the PDN connection deletion procedure in the connection re-establishment method in this embodiment of this application ends.

Further, after the PDN connection deletion procedure shown in FIG. 8a ends, FIG. 8b-1 and FIG. 8b-2 show a PDN connection establishment procedure in the connection re-establishment method in this embodiment of this application. The PDN connection establishment procedure includes the following steps.

S813: The terminal sends a PDN connection establishment request to the MME by using the E-UTRAN device, so that the MME receives the PDN connection establishment request from the terminal. The PDN connection establishment request carries a second connection identifier.

In this embodiment of this application, the second connection identifier may be, for example, an APN corresponding to a to-be-established PDN connection, or the second connection identifier may be, for example, a default bearer identifier corresponding to a deleted PDN connection. This is not specifically limited in this embodiment of this application.

Optionally, in this embodiment of this application, if the terminal can receive the information about the target PGW, the PDN connection establishment request may further carry the information about the target PGW. This is not specifically limited in this embodiment of this application.

Optionally, in this embodiment of this application, if the terminal has started the connection re-establishment timer, the terminal may send the PDN connection establishment request to the MME by using the E-UTRAN device after the connection re-establishment timer expires. In this way, when PDN connections of a plurality of terminals need to be re-established, the PDN connections of all the terminals may be controlled to be re-established within a specific period of time, thereby avoiding a prior-art problem of overload of another device in a mobile communications network that may be caused when all the terminals simultaneously initiate a PDN connection establishment procedure. Certainly, in this embodiment of this application, if the terminal has not started the connection re-establishment timer, the terminal may send the PDN connection establishment request to the MME by using the E-UTRAN device after receiving the PDN connection deletion command or after the PDN connection deletion procedure ends. For details, refer to an existing PDN connection establishment procedure. Details are not described herein.

S814: When the second connection identifier carried in the PDN connection establishment request is the same as the first connection identifier, the MME determines that the terminal is re-establishing the deleted PDN connection.

For example, if an APN corresponding to the deleted PDN connection is the same as the APN corresponding to the to-be-established PDN connection, the MME determines that the terminal is re-establishing the deleted PDN connection; or if the default bearer identifier corresponding to the deleted PDN connection is the same as a default bearer identifier corresponding to the to-be-established PDN connection, the MME determines that the terminal is re-establishing the deleted PDN connection.

S815: The MME determines the target PGW corresponding to the PDN connection.

Optionally, in this embodiment of this application, the MME may determine, based on the stored information that is about the target PGW and that corresponds to the PDN connection, the target PGW corresponding to the PDN connection, or may determine, based on the information that is about the target PGW and that is carried in the PDN connection establishment request in step S813, the target PGW corresponding to the PDN connection. This is not specifically limited in this embodiment of this application.

S816: The MME selects a target SGW for the PDN connection.

S817: The MME sends a session establishment request 1 to the target SGW, so that the target SGW receives the session establishment request 1 from the MME.

The information that is about the target PGW and that is carried in the session establishment request 1 is used to indicate the target SGW to re-establish the PDN connection to the target PGW.

Optionally, the target SGW in FIG. 8b-1 and FIG. 8b-2 and the source SGW in FIG. 8a may be a same SGW, or may be different SGWs. This is not specifically limited in this embodiment of this application.

S818: The target SGW sends a session establishment request 2 to the target PGW based on the information that is about the target PGW and that is carried in the session establishment request 1, so that the target PGW receives the session establishment request 2 from the target SGW.

The session establishment request 2 is used to indicate the target PGW to establish the PDN connection.

S819: Establish an IP-CAN session corresponding to the PDN connection between the target PGW and the PCRF, to obtain a corresponding charging and QoS policy. For related implementation, refer to an existing implementation. Details are not described herein.

S820: The target PGW sends a session establishment response 2 to the target SGW, so that the target SGW receives the session establishment response 2 from the target PGW.

The session establishment response 2 is used to confirm that the PDN connection is successfully established.

S821: The target SGW sends a session establishment response 1 to the MME, so that the MME receives the session establishment response 1 from the target SGW.

The session establishment response 1 is used to confirm that the PDN connection is successfully established.

S822: The MME sends a bearer establishment request to the E-UTRAN device, so that the E-UTRAN device receives the bearer establishment request from the MME.

The bearer establishment request carries a PDN connection establishment accept message to be sent to the terminal, and the bearer establishment request is used to request the E-UTRAN device to establish the PDN connection.

S823: Reconfigure an RRC connection between the terminal and the E-UTRAN device.

In an RRC connection reconfiguration process, the E-UTRAN device sends the PDN connection establishment accept message to the terminal. For related implementation, refer to an existing RRC connection reconfiguration procedure. Details are not described herein.

S824: The E-UTRAN device sends a bearer establishment response to the MME, so that the MME receives the bearer establishment response from the E-UTRAN device.

The bearer establishment response carries packet forwarding information that is of a default bearer corresponding to the PDN connection and that is allocated by the E-UTRAN device.

S825: The terminal sends a PDN connection establishment complete message to the MME by using the E-UTRAN device, so that the MME receives the PDN connection establishment complete message from the E-UTRAN device.

The PDN connection establishment complete message is used to confirm that the PDN connection is established.

S826: The MME sends a bearer update request to the target SGW, so that the target SGW receives the bearer update request from the MME.

The bearer update request carries the packet forwarding information that is of the default bearer corresponding to the PDN connection and that is allocated by the E-UTRAN device.

S827: The target SGW sends the bearer update request to the target PGW, so that the target PGW receives the bearer update request from the target SGW.

In this case, the PDN connection establishment procedure in the connection re-establishment method in this embodiment of this application ends.

Based on the connection re-establishment method provided in this embodiment of this application, the connection of the terminal may be re-established to a specified PGW, thereby meeting a requirement of migrating a connection of one PGW to another PGW or implementing load balancing between different boards/interfaces/processes of a single PGW in an operation and maintenance scenario such as upgrading, cutover, or load balancing.

Actions of the source PGW or the MME in steps S801 to S827 may be performed by the processor 501 in the communications device 500 shown in FIG. 5 by invoking the application program code stored in the memory 503. This is not limited in this embodiment.

Optionally, for example, the connection re-establishment system shown in FIG. 1 is applied to the EPS network shown in FIG. 4, and the connection of the terminal is specifically a PDN connection of the terminal. FIG. 9A and FIG. 9B show a connection re-establishment method according to an embodiment of this application. The connection re-establishment method includes the following steps.

S901 is similar to step S801 in the embodiment shown in FIG. 8a. A difference lies in, for example, that the source PGW in step S801 is replaced with a source SGW in this embodiment of this application. For other related descriptions, refer to the embodiment shown in FIG. 8a. Details are not described herein.

S902: The source SGW sends a bearer deletion request 1 to a source PGW, so that the source PGW receives the bearer deletion request 1 from the source SGW.

The bearer deletion request 1 is used to indicate the source PGW to delete a PDN connection of the terminal.

S903: The source PGW sends a bearer deletion response 1 to the source SGW, so that the source SGW receives the bearer deletion response 1 from the source PGW.

S904 is similar to step S802 in FIG. 8a. A difference lies in, for example, that the source PGW in step S802 is replaced with the source SGW in this embodiment of this application, and the target PGW in step S802 is replaced with a target SGW in this embodiment of this application. For other related descriptions, refer to the embodiment shown in FIG. 8a. Details are not described herein.

S905: The source SGW sends a bearer deletion request 2 to an MME, so that the MME receives the bearer deletion request 2 from the source SGW.

The bearer deletion request 2 carries the information about the target SGW, and is used to delete a PDN connection of the terminal and re-establish the PDN connection to the target SGW.

Optionally, in this embodiment of this application, the bearer deletion request 2 may further carry a connection re-establishment timer, and the connection re-establishment timer is used to indicate a time in which the terminal re-establishes the PDN connection. The connection re-establishment timer is randomly allocated by the source SGW. For example, the time may be in a range of 1 to 60 minutes. This is not specifically limited in this embodiment of this application.

S906: Optionally, the MME stores the information about the target SGW.

Specifically, in this embodiment of this application, the MME may obtain and store a first connection identifier corresponding to the PDN connection in a process of establishing the PDN connection. Further, in this case, the MME may bind the target SGW and the first connection identifier, in other words, may establish a correspondence between the first connection identifier and the target SGW. This is not specifically limited in this embodiment of this application.

For related descriptions of the first connection identifier, refer to the embodiment shown in FIG. 8a. Details are not described herein.

S907 to S911 are similar to steps S806 to S810 in the embodiment shown in FIG. 8a. A difference lies in, for example, that the target PGW in steps S801 to S810 is replaced with the target SGW in this embodiment of this application. For other related descriptions, refer to the embodiment shown in FIG. 8a. Details are not described herein.

S912: The MME sends a bearer deletion response 2 to the source SGW, so that the source SGW receives the bearer deletion response 2 from the MME.

The bearer deletion response 2 is used to confirm that the PDN connection has been deleted.

S913 and S914 are similar to steps 813 and S814 in the embodiment shown in FIG. 8b-1. A difference lies in, for example, that the target PGW in steps S813 and S814 is replaced with the target SGW in this embodiment of this application. For other related descriptions, refer to the embodiment shown in FIG. 8b-1 and FIG. 8b-2. Details are not described herein.

S915: The MME determines the target SGW corresponding to the PDN connection.

Optionally, in this embodiment of this application, the MME may determine, based on the stored information that is about the target SGW and corresponds to the PDN connection, the target SGW corresponding to the PDN connection, or may determine, based on the information that is about the target SGW and that is carried in the PDN connection establishment request in step S913, the target SGW corresponding to the PDN connection. This is not specifically limited in this embodiment of this application.

S916: The MME selects a target PGW for the PDN connection.

S917 to S927 are the same as steps S817 to S827 in the embodiment shown in FIG. 8b-1 and FIG. 8b-2. For related descriptions, refer to the embodiment shown in FIG. 8b-1 and FIG. 8b-2. Details are not described herein.

Based on the connection re-establishment method provided in this embodiment of this application, the connection of the terminal may be re-established to a specified SGW, thereby meeting a requirement of migrating a connection of one SGW to another SGW or implementing load balancing between different boards/interfaces/processes of a single SGW in an operation and maintenance scenario such as upgrading, cutover, or load balancing.

Actions of the source SGW or the MME in steps S901 to S927 may be performed by the processor 501 in the communications device 500 shown in FIG. 5 by invoking the application program code stored in the memory 503. This is not limited in this embodiment.

Optionally, for example, the connection re-establishment system shown in FIG. 1 is applied to the 5G network shown in FIG. 3, and the connection of the terminal is specifically a PDU session of the terminal. FIG. 10 shows a connection re-establishment method according to an embodiment of this application. The connection re-establishment method includes the following steps.

S1001 is the same as step S601 in the embodiment shown in FIG. 6a-1. For related descriptions, refer to the embodiment shown in FIG. 6a-1 and FIG. 6a-2. Details are not described herein.

S1002 is the same as step S604 in the embodiment shown in FIG. 6a-1. For related descriptions, refer to the embodiment shown in FIG. 6a-1 and FIG. 6a-2. Details are not described herein.

S1003: The source SMF network element sends an N1N2 message forwarding request to an AMF network element, so that the AMF network element receives the N1N2 message forwarding request from the source SMF network element.

The N1N2 message forwarding request carries a PDU session update command to be sent to the terminal, and if a session and a session and service continuity (session and service continuity, SSC) mode of a current PDU session of the terminal is not an SSC3 mode, the PDU session update command further carries indication information of the SSC mode 3. The indication information is used to indicate the terminal to delete the original PDU session after re-establishing the PDU session.

Optionally, in this embodiment of this application, the N1N2 message forwarding request or the PDU session update command may further carry the information about the target SMF network element, and the information about the target SMF network element is used to re-establish (reactive) the PDU session to the target SMF network element. This is not specifically limited in this embodiment of this application.

Optionally, in this embodiment of this application, the PDU session update command may further carry a connection re-establishment timer, and the connection re-establishment timer is used to indicate a time in which the terminal re-establishes the PDU session. The connection re-establishment timer is randomly allocated by the source SMF network element. For example, the time may be in a range of 1 to 60 minutes. This is not specifically limited in this embodiment of this application.

S1004: The AMF network element sends an N1N2 message forwarding response to the source SMF network element, so that the source SMF network element receives the N1N2 message forwarding response from the AMF network element.

S1005 is the same as step S607 in the embodiment shown in FIG. 6a-1. For related descriptions, refer to the embodiment shown in FIG. 6a-1 and FIG. 6a-2. Details are not described herein.

S1006: The AMF network element forwards a PDU session update command to an NG-AN device, so that the terminal receives the PDU session update command from the SMF network element.

S1007 is the same as step S610 in the embodiment shown in FIG. 6a-2. For related descriptions, refer to the embodiment shown in FIG. 6a-1 and FIG. 6a-2. Details are not described herein.

S1008 to S1025 are the same as steps S621 to S638 in the embodiment shown in FIG. 6b-2. For related descriptions, refer to the embodiment shown in FIG. 6b-1 and -1 and FIG. 6b-2. Details are not described herein.

S1026: After the PDU session is successfully established, the terminal or a network side triggers a procedure of deleting the original PDU session. For related descriptions, refer to an existing implementation. Details are not described herein.

Based on the connection re-establishment method provided in this embodiment of this application, in one aspect, the connection of the terminal may be re-established to a specified SMF network element, thereby meeting a requirement of migrating a connection of one SMF network element to another SMF network element or implementing load balancing between different boards/interfaces/processes of a single SMF network element in an operation and maintenance scenario such as upgrading, cutover, or load balancing. In another aspect, in this embodiment of this application, because the original PDU session may be deleted after a new PDU session is established, service continuity can be ensured.

Actions of the source SMF network element or the AMF network element in steps S1001 to S1026 may be performed by the processor 501 in the communications device 500 shown in FIG. 5 by invoking the application program code stored in the memory 503. This is not limited in this embodiment.

Optionally, for example, the connection re-establishment system shown in FIG. 1 is applied to the 5G network shown in FIG. 3, and the connection of the terminal is specifically a PDU session of the terminal. FIG. 11A and FIG. 11B show a connection re-establishment method according to an embodiment of this application. The connection re-establishment method includes the following steps.

S1101 to S1005 are the same as steps S701 to S705 in the embodiment shown in FIG. 7. For related descriptions, refer to the embodiment shown in FIG. 7. Details are not described herein.

S1106 to S1111 are the same as steps S1002 to S1007 in the embodiment shown in FIG. 10. For related descriptions, refer to the embodiment shown in FIG. 10. Details are not described herein.

S1112 to S1129 are the same as steps S723 to S740 in the embodiment shown in FIG. 7. For related descriptions, refer to the embodiment shown in FIG. 7. Details are not described herein.

S1130: After the PDU session is successfully established, the terminal or a network side triggers a procedure of deleting the original PDU session. For related descriptions, refer to an existing implementation. Details are not described herein.

Based on the connection re-establishment method provided in this embodiment of this application, in one aspect, the connection of the terminal may be re-established to a specified SMF network element and a specified UPF network element, thereby meeting a requirement of migrating a connection of one UPF network element to another UPF network element or implementing load balancing between different boards/interfaces/processes of a single UPF network element in an operation and maintenance scenario such as upgrading, cutover, or load balancing. In another aspect, in this embodiment of this application, because the original PDU session may be deleted after a new PDU session is established, service continuity can be ensured.

Actions of the source UPF network element or the AMF network element in steps S1101 to S1129 may be performed by the processor 501 in the communications device 500 shown in FIG. 5 by invoking the application program code stored in the memory 503. This is not limited in this embodiment.

Optionally, for example, the connection re-establishment system shown in FIG. 2 is applied to the 5G network shown in FIG. 3, the connection of the terminal is specifically registration, and an access request is specifically a registration request. FIG. 12a-1 and FIG. 12a-2 show a deregistration procedure in a connection re-establishment method according to an embodiment of this application. The deregistration procedure includes the following steps.

S1201: A source AMF network element determines that deregistration of a terminal on the source AMF network element is to be performed.

Optionally, in this embodiment of this application, when the source AMF network element triggers, for reasons such as upgrading, cutover, or load balancing, deregistration of all or some terminals carried by the source AMF network element, the source AMF network element may determine that deregistration of the terminal on the source AMF network element is to be performed. This is not specifically limited in this embodiment of this application.

S1202: The source AMF network element obtains information about a target AMF network element.

Optionally, the source AMF network element and the target AMF network element in this embodiment of this application may be a same AMF network element, or may be different AMF network elements. This is not specifically limited in this embodiment of this application. The information about the target AMF network element may be, for example, a globally unique access and mobility function identifier (globally unique AMF identifier, GUAMI) of the target AMF network element. This is not specifically limited in this embodiment of this application.

Optionally, in this embodiment of this application, for a manner in which the source AMF network element obtains the information about the target AMF network element, refer to a manner in which the source SMF network element obtains the information about the target SMF network element in the embodiment shown in FIG. 6a-1 and FIG. 6a-2. Details are not described herein.

S1203: The source AMF network element sends a downlink NAS forwarding message to an NG-AN device, so that the NG-AN device receives the downlink NAS forwarding message from the source AMF network element.

The downlink NAS forwarding message carries a deregistration request message to be sent to the terminal.

Optionally, in this embodiment of this application, the downlink NAS forwarding message or the deregistration request message may further carry the information about the target AMF network element, and the information about the target AMF network element is used by the NG-AN device to send a registration request of the terminal to the target AMF network element. This is not specifically limited in this embodiment of this application.

Optionally, in this embodiment of this application, the deregistration request message may further carry a connection re-establishment timer, and the connection re-establishment timer is used to indicate a time in which the terminal re-initiates a registration procedure. The connection re-establishment timer is randomly allocated by the source AMF network element. For example, the time may be in a range of 1 to 60 minutes. This is not specifically limited in this embodiment of this application.

S1204: Optionally, if the downlink NAS forwarding message carries the information about the target AMF network element, the NG-AN device stores the information about the target AMF network element.

Specifically, in this embodiment of this application, the NG-AN device may obtain a corresponding RRC connection identifier in a registration process of the terminal. Further, in this case, the NG-AN device may bind the target AMF network element and the RRC connection identifier, in other words, may establish a correspondence between the RRC connection identifier and the target AMF network element. This is not specifically limited in this embodiment of this application.

S1205: The NG-AN device sends the deregistration request message to the terminal, so that the terminal receives the deregistration request message from the NG-AN device.

S1206: Optionally, if the deregistration request message includes the connection re-establishment timer, the terminal starts the connection re-establishment timer.

Optionally, in this embodiment of this application, the terminal may start the connection re-establishment timer after receiving the connection re-establishment timer, or may start the connection re-establishment timer after the deregistration procedure of the terminal ends. This is not specifically limited in this embodiment of this application.

S1207: The source AMF network element sends an SM context deletion request to an SMF network element, so that the SMF network element receives the SM context deletion request from the source AMF network element.

The SM context deletion request is used to request the SMF network element to delete a PDU session of the terminal.

S1208: The SMF network element sends an N4 session deletion request to a UPF network element, so that the UPF network element receives the N4 session deletion request from the SMF network element.

The N4 session deletion request is used to request the UPF network element to delete an N4 session of the terminal. For related descriptions, refer to an existing implementation. Details are not described herein.

S1209: The UPF network element sends an N4 session deletion response to the SMF network element, so that the SMF network element receives the N4 session deletion response from the UPF network element.

S1210: The SMF network element sends an SM context deletion response to the source AMF network element, so that the source AMF network element receives the SM context deletion response from the SMF network element.

S1211 and S1212: The SMF network element triggers termination of a session management policy of a PCF network element, and triggers deregistration to a UDM network element. For related descriptions, refer to an existing implementation. Details are not described herein.

S1213 and S1214: The source AMF network element triggers termination of an access and mobility management policy of the PCF network element, and triggers deregistration to the UDM network element. For related descriptions, refer to an existing implementation. Details are not described herein.

S1215: The terminal sends a deregistration accept message to the source AMF network element, so that the source AMF network element receives the deregistration accept message from the terminal.

S1216: Delete an established N2 user context between the NG-AN device and the source AMF network element. The source AMF network element adds indication information to an N2 user context deletion command sent to the NG-AN device, and the indication information is used to indicate the NG-AN device to reserve an RRC connection between the NG-AN device and the terminal.

In this case, the deregistration procedure in the connection re-establishment method in this embodiment of this application ends.

Further, after the deregistration procedure shown in FIG. 12a-1 and FIG. 12a-2 ends, FIG. 12b shows a registration procedure in the connection re-establishment method in this embodiment of this application. The registration procedure includes the following steps.

S1217: The terminal sends a registration request 1 to an access device on the reserved RRC connection between the NG-AN device and the terminal, so that the NG-AN device receives the registration request 1 from the terminal on the reserved RRC connection between the NG-AN device and the terminal.

In this embodiment of this application, because the access device receives the registration request 1 from the terminal on an original RRC connection, the access device may learn that the terminal is currently initiating a re-registration procedure.

Optionally, in this embodiment of this application, if the terminal may receive the information about the target AMF network element, the registration request 1 may further carry the information about the target AMF network element. This is not specifically limited in this embodiment of this application.

Optionally, in this embodiment of this application, if the terminal has started the connection re-establishment timer, the terminal may send the registration request 1 to the NG-AN device after the connection re-establishment timer expires. In this way, when a plurality of terminals initiates a registration procedure, registration procedures of all the terminals may be controlled to be completed within a specific period of time, thereby avoiding a prior-art problem of overload of another device in a mobile communications network that may be caused when all the terminals simultaneously initiate the registration procedures. Certainly, in this embodiment of this application, if the terminal has not started the re-establishment connection timer, the terminal may send the registration request 1 to the NG-AN device after receiving the deregistration request message or after the deregistration procedure ends. For details, refer to an existing re-registration procedure. Details are not described herein.

S 1218: The NG-AN device determines the target AMF network element.

Optionally, in this embodiment of this application, the NG-AN device may determine the target AMF network element based on the stored information that is about the target AMF network element and that corresponds to the RRC connection, or may determine the target AMF network element based on the information that is about the target AMF network element and that is carried in the registration request in step S 1217. This is not specifically limited in this embodiment of this application.

S1219: The NG-AN device sends the registration request 1 to the target AMF network element, so that the target AMF network element receives the registration request 1 from the NG-AN device.

S 1220: The target AMF network element sends an identifier request to the terminal, so that the terminal receives the identifier request from the target AMF network element.

The identifier request is used to request to obtain an identifier of the terminal.

Optionally, in this embodiment of this application, the identifier of the terminal may be, for example, a subscription concealed identifier (subscription concealed identifier, SUCI) of the terminal. This is not specifically limited in this embodiment of this application.

S1221: The terminal sends an identifier response to the target AMF network element, so that the target AMF network element receives the identifier response from the terminal.

The identifier response carries the identifier of the terminal.

S1222: The target AMF network element sends a registration request 2 to the UDM network element, so that the UDM network element receives the registration request 2 from the target AMF network element. The registration request 2 is used to notify the UDM network element that the terminal registers with the target AMF network element.

S1223: The target AMF network element obtains subscription data of the terminal from the UDM network element based on the identifier of the terminal.

S1224: The target AMF network element subscribes to a subscription data change notification from the UDM network element.

For specific implementation of step S1223 and step S1224, refer to an existing implementation. Details are not described herein.

S1225: The target AMF network element sends a registration accept message to the terminal, so that the terminal receives the registration accept message from the target AMF network element.

The registration accept message is used to confirm that the terminal successfully registers with the target AMF network element.

S1226: The terminal sends a registration complete message to the target AMF network element, so that the target AMF network element receives the registration complete message from the terminal.

In this case, the registration procedure in the connection re-establishment method in this embodiment of this application ends.

Based on the connection re-establishment method provided in this embodiment of this application, the connection of the terminal may be re-established to a specified AMF network element, thereby meeting a requirement of migrating a connection of one AMF network element to another AMF network element or implementing load balancing between different boards/interfaces/processes of a single AMF network element in an operation and maintenance scenario such as upgrading, cutover, or load balancing.

Actions of the source AMF network element or the NG-AN device in steps S1201 to S1226 may be performed by the processor 501 in the communications device 500 shown in FIG. 5 by invoking the application program code stored in the memory 503. This is not limited in this embodiment.

The foregoing describes, mainly from a perspective of interaction between network elements, the solutions provided in the embodiments of this application. It may be understood that, to implement the foregoing functions, the source network device (including a source gateway device or a source mobility management network element), the mobility management network element, or the access device includes a corresponding hardware structure and/or software module for implementing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the source network device, the mobility management network element, or the access device may be divided into function modules based on the foregoing method examples. For example, each function module corresponding to each function may be obtained through division, or two or more functions may be integrated into one processing module. The integrated module may be implemented in a form of hardware, or may be implemented in a form of a software functional module. It should be noted that, in the embodiments of this application, division into the modules is an example, is merely logical function division, and may be other division in actual implementation.

For example, when function modules are obtained through division in an integrated manner, FIG. 13 is a schematic structural diagram of a source network device 130. The source network device 130 includes a processing module 1301 and a transceiver module 1302. The processing module 1301 is configured to determine that a connection of a terminal is to be released. The processing module 1301 is further configured to obtain information about a target network device. The transceiver module 1302 is configured to send the information about the target network device, where the information about the target network device is used to re-establish the connection to the target network device.

Optionally, the transceiver module 1302 is further configured to send a connection re-establishment timer to the terminal, where the connection re-establishment timer is used to indicate a time in which the terminal re-establishes the connection.

Optionally, the transceiver module 1302 is further configured to send first indication information to the terminal, where the first indication information is used to indicate the terminal to delete the original connection after re-establishing the connection.

Optionally, the source network device 130 is a source session management network element, and the target network device is a target session management network element; or the source network device 130 is a source data gateway, and the target network device is a target data gateway; or the source network device 130 is a source serving gateway, and the target network device is a target serving gateway. Correspondingly, that the sending module is configured to send the information about the target network device is specifically: The sending module is configured to send the information about the target network device to a mobility management network element or the terminal.

Optionally, in this embodiment of this application, the information about the target network device includes one or more of a uniform resource identifier URI of the target network device, an internet protocol IP address of the target network device, or a fully qualified domain name FQDN of the target network device.

Optionally, the source network device 130 is a source session management network element, and the target network device is a target session management network element. Correspondingly, that the processing module 1301 is configured to determine that a connection of a terminal is to be released is specifically: The processing module 1301 is configured to receive a connection release request from a source user plane network element, where the connection release request carries information about a target user plane network element, and is used to request the source session management network element to release a connection that is of the terminal and that is on the source user plane network element.

Optionally, the source network device 130 is a source mobility management network element, and the target network device is a target mobility management network element. Correspondingly, that the transceiver module 1302 is configured to send the information about the target network device is specifically: The transceiver module 1302 is configured to send information about the target mobility management network element to an access device or the terminal.

Optionally, the transceiver module 1302 is further configured to send third indication information to the access device, where the third indication information is used to indicate the access device to reserve an RRC connection between the access device and the terminal.

Optionally, in this embodiment of this application, the information about the target mobility management network element includes a GUMMEI of the target mobility management network element or a GUAMI of the target mobility management network element.

Optionally, that the processing module 1301 is configured to obtain the information about the target network device is specifically: The processing module 1301 is configured to receive an operation and maintenance OM command, where the OM command carries the information about the target network device.

Alternatively, optionally, that the processing module 1301 is configured to obtain information about the target network device is specifically: The processing module 1301 is configured to: send a first request message to a network repository function network element, where the first request message is used to request to obtain the information that is about the target network device and that is required for re-establishing the connection; and receive a first response message from the network repository function network element, where the first response message carries the information about the target network device.

Alternatively, optionally, that the processing module 1301 is configured to obtain information about the target network device is specifically: The processing module 1301 is configured to receive the information about the target network device from a policy control network element.

All related content of each step involved in the foregoing method embodiments may be referenced to function descriptions of a corresponding function module, and details are not described herein.

In this embodiment, the source network device 130 is presented in a form of obtaining each function module through division in an integrated manner. "Module" herein may indicate a specific ASIC, a circuit, a processor and a memory that execute one or more software or firmware programs, an integrated logic circuit, and/or another device that can provide the foregoing function. In a simple embodiment, a person skilled in the art may know that the source network device 130 may use a form shown in FIG. 5.

For example, the processor 501 in FIG. 5 may invoke the computer execution instruction stored in the memory 503, so that the source network device 130 performs the connection re-establishment method in the foregoing method embodiments.

Specifically, a function/implementation process of the transceiver module 1302 and the processing module 1301 in FIG. 13 may be implemented by the processor 501 in FIG. 5 by invoking the computer execution instruction stored in the memory 503. Alternatively, a function/implementation process of the processing module 1301 in FIG. 13 may be implemented by the processor 501 in FIG. 5 by invoking the computer execution instruction stored in the memory 503, and a function/implementation process of the transceiver module 1302 in FIG. 13 may be implemented by the communications interface 504 in FIG. 5.

Because the source network device 130 provided in this embodiment may perform the foregoing connection re-establishment method, for a technical effect that can be obtained by the source network device 130, refer to the foregoing method embodiments. Details are not described herein.

Optionally, an embodiment of this application further provides an apparatus (for example, the apparatus may be a chip system), and the apparatus includes a processor, configured to support a source network device in implementing the foregoing connection re-establishment method, for example, determining that a connection of a terminal is to be released, and obtaining information about a target network device. In a possible design, the apparatus further includes a memory. The memory is configured to store a program instruction and data that are necessary for the source network device. Certainly, the memory may not be in the apparatus. When the apparatus is a chip system, the apparatus may include a chip, or may include a chip and another discrete device. This is not specifically limited in this embodiment of this application.

For example, when function modules are obtained through division in an integrated manner, FIG. 14 is a schematic structural diagram of a mobility management network element 140. The mobility management network element 140 includes a processing module 1401 and a transceiver module 1402. The processing module 1401 is configured to obtain and store information that is about a target gateway device and that is required for re-establishing a connection that is of a terminal and that corresponds to a first connection identifier. The processing module 1401 is further configured to: after the transceiver module 1402 receives a session establishment request from the terminal, when a second connection identifier carried in the session establishment request is the same as the first connection identifier, determine that the terminal is re-establishing the connection. The transceiver module 1402 is further configured to send a request message to the target gateway device based on the information about the target gateway device, where the request message is used to indicate the target gateway device to establish the connection.

Optionally, the processing module 1401 is further configured to obtain and store the first connection identifier.

Optionally, in this embodiment of this application, the target gateway device is a target session management network element, and correspondingly, the first connection identifier includes a data network name DNN corresponding to the connection or a session identifier corresponding to the connection.

Optionally, in this embodiment of this application, the target gateway device is a target data gateway or a target serving gateway, and correspondingly, the first connection identifier includes an access point name APN corresponding to the connection or a default bearer identifier corresponding to the connection.

All related content of each step involved in the foregoing method embodiments may be referenced to function descriptions of a corresponding function module, and details are not described herein.

In this embodiment, the mobility management network element 140 is presented in a form of obtaining each function module through division in an integrated manner. "Module" herein may indicate a specific ASIC, a circuit, a processor and a memory that execute one or more software or firmware programs, an integrated logic circuit, and/or another device that can provide the foregoing function. In a simple embodiment, a person skilled in the art may know that the mobility management network element 140 may use a form shown in FIG. 5.

For example, the processor 501 in FIG. 5 may invoke the computer execution instruction stored in the memory 503, so that the mobility management network element 140 performs the connection re-establishment method in the foregoing method embodiments.

Specifically, a function/implementation process of the transceiver module 1402 and the processing module 1401 in FIG. 14 may be implemented by the processor 501 in FIG. 5 by invoking the computer execution instruction stored in the memory 503. Alternatively, a function/implementation process of the processing module 1401 in FIG. 14 may be implemented by the processor 501 in FIG. 5 by invoking the computer execution instruction stored in the memory 503, and a function/implementation process of the transceiver module 1402 in FIG. 14 may be implemented by the communications interface 504 in FIG. 5.

Because the mobility management network element 140 provided in this embodiment may perform the foregoing connection re-establishment method, for a technical effect that can be obtained by the mobility management network element 140, refer to the foregoing method embodiments. Details are not described herein.

Optionally, an embodiment of this application further provides an apparatus (for example, the apparatus may be a chip system), and the apparatus includes a processor, configured to support a mobility management network element in implementing the foregoing connection re-establishment method, for example, obtaining and storing information that is about a target gateway device and that is required for re-establishing a connection that is of a terminal and that corresponds to a first connection identifier. In a possible design, the apparatus further includes a memory. The memory is configured to store a program instruction and data that are necessary for the mobility management network element. Certainly, the memory may not be in the apparatus. When the apparatus is a chip system, the apparatus may include a chip, or may include a chip and another discrete device. This is not specifically limited in this embodiment of this application.

For example, when function modules are obtained through division in an integrated manner, FIG. 15 is a schematic structural diagram of an access device 150. The access device 150 includes a processing module 1501 and a transceiver module 1502. The processing module 1501 is configured to obtain and store information that is about a target mobility management network element and that is required for re-establishing the connection of the terminal. The transceiver module 1502 is configured to receive, on an RRC connection corresponding to the connection, an access request from the terminal. The transceiver module 1502 is further configured to send an access request to the target mobility management network element based on the information about the target mobility management network element, where the access request is used to indicate the target mobility management network element to establish the connection.

Optionally, the transceiver module 1502 is further configured to receive third indication information from the source mobility management network element, where the third indication information is used to indicate the access device to reserve an RRC connection corresponding to the connection.

All related content of each step involved in the foregoing method embodiments may be referenced to function descriptions of a corresponding function module, and details are not described herein.

In this embodiment, the access device 150 is presented in a form of obtaining each function module through division in an integrated manner. "Module" herein may indicate a specific ASIC, a circuit, a processor and a memory that execute one or more software or firmware programs, an integrated logic circuit, and/or another device that can provide the foregoing function. In a simple embodiment, a person skilled in the art may know that the access device 150 may use a form shown in FIG. 5.

For example, the processor 501 in FIG. 5 may invoke the computer execution instruction stored in the memory 503, so that the access device 150 performs the connection re-establishment method in the foregoing method embodiments.

Specifically, a function/implementation process of the transceiver module 1502 and the processing module 1501 in FIG. 15 may be implemented by the processor 501 in FIG. 5 by invoking the computer execution instruction stored in the memory 503. Alternatively, a function/implementation process of the processing module 1501 in FIG. 15 may be implemented by the processor 501 in FIG. 5 by invoking the computer execution instruction stored in the memory 503, and a function/implementation process of the transceiver module 1502 in FIG. 15 may be implemented by the communications interface 504 in FIG. 5.

Because the access device 150 provided in this embodiment may perform the foregoing connection re-establishment method, for a technical effect that can be obtained by the access device 150, refer to the foregoing method embodiments. Details are not described herein.

Optionally, an embodiment of this application further provides an apparatus (for example, the apparatus may be a chip system), and the apparatus includes a processor, configured to support an access device in implementing the foregoing connection re-establishment method, for example, obtaining and storing information that is about a target mobility management network element and that is required for re-establishing a connection of a terminal. In a possible design, the apparatus further includes a memory. The memory is configured to store a program instruction and data that are necessary for the access device. Certainly, the memory may not be in the apparatus. When the apparatus is a chip system, the apparatus may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, the word "comprising" (comprising) does not exclude another component or another step, and "a/an" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, clearly, various modifications and combinations may be made to them without departing from the spirit and scope of this application. Correspondingly, the specification and the accompanying drawings are merely examples descriptions of this application defined by the accompanying claims, and are intended to cover any or all of modifications, variations, combinations or equivalents within the scope of this application. Clearly, a person skilled in the art can make various modifications and variations to this application without departing from the spirit and scope of this application. In this way, this application is intended to cover these modifications and variations of this application provided that they fall within the scope of the following claims and their equivalent technologies.

## Claims

1. A connection re-establishment method, wherein the connection re-establishment method comprises:
determining, by a source network device, that a connection of a terminal is to be released;
obtaining, by the source network device, information about a target network device; and
sending, by the source network device, the information about the target network device, wherein the information about the target network device is used to re-establish the connection to the target network device.

2. The connection re-establishment method according to claim 1, wherein the connection re-establishment method further comprises:
sending, by the source network device, a connection re-establishment timer to the terminal, wherein the connection re-establishment timer is used to indicate a time in which the terminal re-establishes the connection.

3. The connection re-establishment method according to claim 1 or 2, wherein the connection re-establishment method further comprises:
sending, by the source network device, first indication information to the terminal, wherein the first indication information is used to indicate the terminal to delete the original connection after re-establishing the connection.

4. The connection re-establishment method according to any one of claims 1 to 3, wherein the source network device is a source session management network element, and the target network device is a target session management network element; the source network device is a source data gateway, and the target network device is a target data gateway; or the source network device is a source serving gateway, and the target network device is a target serving gateway; and correspondingly, the sending, by the source network device, the information about the target network device is specifically:
sending, by the source network device, the information about the target network device to a mobility management network element or the terminal.

5. The connection re-establishment method according to claim 4, wherein the information about the target network device comprises one or more of a uniform resource identifier URI of the target network device, an internet protocol IP address of the target network device, or a fully qualified domain name FQDN of the target network device.

6. The connection re-establishment method according to any one of claims 1 to 5, wherein the source network device is the source session management network element, and the target network device is the target session management network element; and correspondingly, the determining, by a source network device, that a connection of a terminal is to be released is specifically:
receiving, by the source session management network element, a connection release request from a source user plane network element, wherein the connection release request carries information about a target user plane network element, and is used to request the source session management network element to release a connection that is of the terminal and that is on the source user plane network element.

7. The connection re-establishment method according to claim 1 or 2, wherein the source network device is a source mobility management network element, and the target network device is a target mobility management network element; and correspondingly, the sending, by the source network device, the information about the target network device is specifically:
sending, by the source mobility management network element, information about the target mobility management network element to an access device or the terminal.

8. The connection re-establishment method according to claim 7, wherein the connection re-establishment method further comprises:
sending, by the source mobility management network element, third indication information to the access device, wherein the third indication information is used to indicate the access device to reserve a radio resource control RRC connection between the access device and the terminal.

9. The connection re-establishment method according to claim 7 or 8, wherein the information about the target mobility management network element comprises a globally unique mobility management entity identifier GUMMEI of the target mobility management network element or a globally unique access and mobility management function identifier GUAMI of the target mobility management network element.

10. The connection re-establishment method according to any one of claims 4 to 9, wherein the obtaining, by the source network device, information about a target network device is specifically:
receiving, by the source network device, an operation and maintenance OM command, wherein the OM command carries the information about the target network device;
sending, by the source network device, a first request message to a network repository function network element, wherein the first request message is used to request to obtain the information that is about the target network device and that is required for re-establishing the connection; and receiving, by the source network device, a first response message from the network repository function network element, wherein the first response message carries the information about the target network device; or
receiving, by the source network device, the information about the target network device from a policy control network element.

11. A connection re-establishment method, wherein the connection re-establishment method comprises:
obtaining and storing, by a mobility management network element, information that is about a target gateway device and that is required for re-establishing a connection that is of a terminal and that corresponds to a first connection identifier;
after the mobility management network element receives a session establishment request from the terminal, when a second connection identifier carried in the session establishment request is the same as the first connection identifier, determining, by the mobility management network element, that the terminal is re-establishing the connection; and
sending, by the mobility management network element, a request message to the target gateway device based on the information about the target gateway device, wherein the request message is used to indicate the target gateway device to establish a connection.

12. The connection re-establishment method according to claim 11, wherein the connection re-establishment method further comprises:
obtaining and storing, by the mobility management network element, the first connection identifier.

13. The connection re-establishment method according to claim 11 or 12, wherein the target gateway device is a target session management network element; and correspondingly, the first connection identifier comprises a data network name DNN corresponding to the connection or a session identifier corresponding to the connection.

14. The connection re-establishment method according to claim 11 or 12, wherein the target gateway device is a target data gateway or a target serving gateway; and correspondingly, the first connection identifier comprises: an access point name APN corresponding to the connection or a default bearer identifier corresponding to the connection.

15. A connection re-establishment method, wherein the connection re-establishment method comprises:
obtaining and storing, by an access device, information that is about a target mobility management network element and that is required for re-establishing a connection of a terminal;
receiving, by the access device on a radio resource control RRC connection corresponding to the connection, an access request from the terminal; and
sending, by the access device, the access request to the target mobility management network element based on the information about the target mobility management network element, wherein the access request is used to indicate the target mobility management network element to establish a connection.

16. The connection re-establishment method according to claim 15, wherein the connection re-establishment method further comprises:
receiving, by the access device, third indication information from a source mobility management network element, wherein the third indication information is used to indicate the access device to reserve the RRC connection corresponding to the connection.

17. A source network device, wherein the source network device comprises a processing module and a transceiver module, wherein
the processing module is configured to determine that a connection of a terminal is to be released;
the processing module is further configured to obtain information about a target network device; and
the transceiver module is configured to send the information about the target network device, wherein the information about the target network device is used to re-establish the connection to the target network device.

18. The source network device according to claim 17, wherein
the transceiver module is further configured to send a connection re-establishment timer to the terminal, wherein the connection re-establishment timer is used to indicate a time in which the terminal re-establishes the connection.

19. The source network device according to claim 17 or 18, wherein
the transceiver module is further configured to send first indication information to the terminal, wherein the first indication information is used to indicate the terminal to delete the original connection after re-establishing the connection.

20. The source network device according to any one of claims 17 to 19, wherein the source network device is a source session management network element, and the target network device is a target session management network element; and correspondingly, that the processing module is configured to determine that a connection of a terminal is to be released is specifically:
the processing module is configured to receive a connection release request from a source user plane network element, wherein the connection release request carries information about a target user plane network element, and is used to request the source session management network element to release a connection that is of the terminal and that is on the source user plane network element.

21. The source network device according to claim 17 or 18, wherein the source network device is a source mobility management network element, and the target network device is a target mobility management network element; and correspondingly, that the transceiver module is configured to send the information about the target network device is specifically:
the transceiver module is configured to send information about the target mobility management network element to an access device or the terminal.

22. The source network device according to claim 21, wherein
the transceiver module is further configured to send third indication information to the access device, wherein the third indication information is used to indicate the access device to reserve a radio resource control RRC connection between the access device and the terminal.

23. The source network device according to any one of claims 20 to 22, wherein that the processing module is configured to obtain information about a target network device is specifically:
the processing module is configured to receive an operation and maintenance OM command, wherein the OM command carries the information about the target network device;
the processing module is configured to: send a first request message to a network repository function network element, wherein the first request message is used to request to obtain the information that is about the target network device and that is required for re-establishing the connection; and receive a first response message from the network repository function network element, wherein the first response message carries the information about the target network device; or
the processing module is configured to receive the information about the target network device from a policy control network element.

24. A mobility management network element, wherein the mobility management network element comprises a processing module and a transceiver module, wherein
the processing module is configured to obtain and store information that is about a target gateway device and that is required for re-establishing a connection that is of a terminal and that corresponds to a first connection identifier;
the processing module is further configured to: after the transceiver module receives a session establishment request from the terminal, when a second connection identifier carried in the session establishment request is the same as the first connection identifier, determine that the terminal is re-establishing the connection; and
the transceiver module is further configured to send a request message to the target gateway device based on the information about the target gateway device, wherein the request message is used to indicate the target gateway device to establish a connection.

25. An access device, wherein the access device comprises a processing module and a transceiver module, wherein
the processing module is configured to obtain and store information that is about a target mobility management network element and that is required for re-establishing a connection of a terminal;
the transceiver module is configured to receive, on a radio resource control RRC connection corresponding to the connection, an access request from the terminal; and
the transceiver module is further configured to send the access request to the target mobility management network element based on the information about the target mobility management network element, wherein the access request is used to indicate the target mobility management network element to establish a connection.

26. A connection re-establishment system, wherein the connection re-establishment system comprises a source gateway device and a mobility management network element, wherein
the source gateway device is configured to determine that a connection that is of a terminal and that corresponds to a first connection identifier is to be released;
the source gateway device is further configured to: obtain information about a target gateway device, and send the information about the target gateway device to the mobility management network element;
the mobility management network element is configured to: receive and store the information about the target gateway device from the source gateway device; and after receiving a session establishment request from the terminal, when a second connection identifier carried in the session establishment request is the same as the first connection identifier, determine that the terminal is re-establishing the connection; and
the mobility management network element is further configured to send a request message to the target gateway device based on the information about the target gateway device, wherein the request message is used to indicate the target gateway device to establish a connection.

27. A connection re-establishment system, wherein the connection re-establishment system comprises a source gateway device and a mobility management network element, wherein
the source gateway device is configured to determine that a connection that is of a terminal and that corresponds to a first connection identifier is to be released;
the source gateway device is further configured to: obtain information about a target gateway device, and send the information about the target gateway device to the mobility management network element;
the mobility management network element is configured to: receive the information about the target gateway device from the source gateway device, and send the information about the target gateway device to the terminal;
the mobility management network element is further configured to: receive a session establishment request from the terminal; and when a second connection identifier carried in the session establishment request is the same as the first connection identifier, determine that the terminal is re-establishing the connection; and
the mobility management network element is further configured to send a request message to the target gateway device based on the information that is about the target gateway device and that is carried in the session establishment request, wherein the request message is used to indicate the target gateway device to establish a connection.

28. A connection re-establishment system, wherein the connection re-establishment system comprises a source mobility management network element and an access device, wherein
the source mobility management network element is configured to determine that a connection that is of a terminal and that corresponds to a first connection identifier is to be released;
the source mobility management network element is further configured to: obtain information about a target mobility management network element, and send the information about the target mobility management network element to the access device;
the access device is configured to receive and store the information about the target mobility management network element from the source mobility management network element; and
the access device is further configured to: receive, on a radio resource control RRC connection corresponding to the connection, an access request from the terminal, and send the access request to the target mobility management network element based on the information about the target mobility management network element, wherein the access request is used to indicate the target mobility management network element to establish a connection.

29. A connection re-establishment system, wherein the connection re-establishment system comprises a source mobility management network element and an access device, wherein
the source mobility management network element is configured to determine that a connection that is of a terminal and that corresponds to a first connection identifier is to be released;
the source mobility management network element is further configured to: obtain information about a target mobility management network element, and send the information about the target mobility management network element to the access device;
the access device is configured to: receive the information about the target mobility management network element from the source mobility management network element, and send the information about the target mobility management network element to the terminal; and
the access device is further configured to: receive, on a radio resource control RRC connection corresponding to the connection, an access request from the terminal, and send the access request to the target mobility management network element based on the information that is about the target mobility management network element and that is carried in the access request, wherein the access request is used to indicate the target mobility management network element to establish a connection.

30. A source network device, comprising a processor and a communications interface, wherein
the communications interface is configured to transmit a received code instruction to the processor, and the processor is configured to run the code instruction to perform the connection re-establishment method according to any one of claims 1 to 10.

31. A mobility management network element, comprising a processor and a communications interface, wherein the communications interface is configured to transmit a received code instruction to the processor, and the processor is configured to run the code instruction to perform the connection re-establishment method according to any one of claims 11 to 14.

32. An access device, comprising a processor and a communications interface, wherein
the communications interface is configured to transmit a received code instruction to the processor, and the processor is configured to run the code instruction to perform the connection re-establishment method according to claim 15 or 16.

33. A processor, configured to perform the connection re-establishment method according to any one of claims 1 to 10, any one of claims 11 to 14, or claim 15 or 16.

34. A chip system, comprising:
a memory, configured to store a computer program; and
a processor, configured to invoke the computer program from the memory and run the computer program, so that a device on which the chip system is installed performs the connection re-establishment method according to any one of claims 1 to 10, any one of claims 11 to 14, or claim 15 or 16.

35. A computer-readable storage medium, comprising a computer program, wherein when the computer program is run on a computer, the computer is enabled to perform the connection re-establishment method according to any one of claims 1 to 10, any one of claims 11 to 14, or claim 15 or 16.

36. A computer program product, wherein the computer program product comprises a computer program, and when the computer program is run on a computer, the computer is enabled to perform the connection re-establishment method according to any one of claims 1 to 10, any one of claims 11 to 14, or claim 15 or 16.

37. An apparatus, configured to perform the connection re-establishment method according to any one of claims 1 to 10, any one of claims 11 to 14, or claim 15 or 16.

38. An apparatus, configured to perform the connection re-establishment method according to any one of claims 1 to 10, any one of claims 11 to 14, or claim 15 or 16.
